# EUROPEAN PATENT SPECIFICATION

(11) **EP 1 499 192 B1**
(45) Date of publication and mention of the grant of the patent: **05.04.2006**
(21) Application number: 03722829.3
(22) Date of filing: 02.05.2003
(51) Int. Cl.: A01N 65/00

(54) **USE OF PLANT MATERIAL AS A TERRESTRIAL MOLLUSCICIDAL AND/OR MOLLUSC-REPELLANT AGENT**
VERWENDUNG VON PFLANZLICHEM MATERIAL ZUR BEKÄMPFUNG VON LANDSCHNECKEN
UTILISATION DE SUBSTANCES VEGETALES COMME MOLLUSCICIDE ET/OU AGENT REPULSIF CONTRE DES MOLLUSQUES TERRESTRES

(30) Priority: 02.05.2002 GB 0210152
(43) Date of publication of application: 26.01.2005
(73) Proprietor: Compton Developments, Ltd., Swansea SA6 8YH (GB)
(72) Inventor: BOWEN, Ivor Delme, Cardiff Univ. Bio. Sci. Bld., Cardiff CF10 3US (GB); ALI, Ahmed, Cardiff Univ. Bio. Sci. Bld., Cardiff CF10 3US (GB)
(74) Representative: Tombling, Adrian George
(86) International application number: PCT/GB2003/001936
(87) International publication number: WO 2003/092385

(56) References cited:
- US-A- 5 290 557
- DATABASE BIOSIS [Online] BIOSCIENCES INFORMATION SERVICE, PHILADELPHIA, PA, US; ALLAM, AMAL F. (1) ET AL: "Laboratory assessment of the molluscicidal activity of Commiphora molmol (Myrrh) on Biomphalaria alexandrina, Bulinus truncatus and Lymnaea cailliaudi." retrieved from STN Database accession no. 2002:113473 XP002250468 & JOURNAL OF THE EGYPTIAN SOCIETY OF PARASITOLOGY, (DECEMBER, 2001) VOL. 31, NO. 3, PP. 683-690. PRINT.,
- DATABASE BIOSIS [Online] BIOSCIENCES INFORMATION SERVICE, PHILADELPHIA, PA, US; DOSSAJI S F ET AL: "ON THE EVALUATION OF THE MOLLUSCICIDAL PROPERTIES OF POLYGONUM -SENEGALENSE-F-SENEGALENSE." retrieved from STN Database accession no. 1978:205277 XP002250469 & LLOYDIA (CINCI), (1977) 40 (3), 290-293.,
- DATABASE BIOSIS [Online] BIOSCIENCES INFORMATION SERVICE, PHILADELPHIA, PA, US; MUDDATHIR A K ET AL: "ANTHELMINTIC PROPERTIES OF POLYGONUM -GLABRUM." retrieved from STN Database accession no. 1987:293019 XP002250470 & J PHARM PHARMACOL, (1987) 39 (4), 296-300.,
- DATABASE CA [Online] CHEMICAL ABSTRACTS SERVICE, COLUMBUS, OHIO, US; DOSSAJI, SAIFUDDIN ET AL: "Quercetin 3-(2"-galloylglucoside), a molluscicidal flavonoid from Polygonum senegalense" retrieved from STN Database accession no. 93:90125 XP002250471 & PHYTOCHEMISTRY (ELSEVIER) (1980), 19(3), 482,
- DATABASE BIOSIS [Online] BIOSCIENCES INFORMATION SERVICE, PHILADELPHIA, PA, US; MENDES N M ET AL: "MOLLUSCICIDE ACTIVITY OF SOME NATURAL PRODUCTS ON BIOMPHALARIA-GLABRATA." retrieved from STN Database accession no. 1986:344023 XP002250472 & MEM INST OSWALDO CRUZ RIO DE J, (1986) 81 (1), 87-92.,
- DATABASE BIOSIS [Online] BIOSCIENCES INFORMATION SERVICE, PHILADELPHIA, PA, US; BUGGE, J. (1) ET AL: "Molluscicidal pterocarpanes from Erythrina burana and a new indole alkaloid from Erythrina brucei." retrieved from STN Database accession no. 1998:97801 XP002250473 & PHARMACEUTICAL AND PHARMACOLOGICAL LETTERS, (NOV., 1997) VOL. 7, NO. 4, PP. 155-156.,

## Description

The present invention relates to the use of plant material as a molluscicidal and/or mollusc-repellant agent. The present invention also relates to a molluscicidal and/or mollusc-repellant preparation comprising plant material. The present invention also relates to a terrestrial molluscicidal and/or mollusc-repellant preparation comprising plant material and a particulate.

Molluscs, especially slugs and snails cause considerable damage to crops and plants, and are therefore a pest to domestic gardeners as well as farmers. Current methods of controlling slugs and snails rely on the broad application of synthetic chemicals such as metaldehyde and methiocarb. There are a number of problems with using such chemicals, including the relatively high cost of the chemicals, the toxicity risks of storing and using such chemicals, and environmental problems, such as biodegradeability and the toxic effects of the compounds on non-target organisms.

There is therefore a need for a new method of preventing damage to crops and plants caused by molluscs.

A wide range of plants are known to be of use in controlling aquatic molluscs. These are reviewed and listed in "Plant Molluscicides", edited by Mott K.E. (1987) UNDP/World Bank/WHO Special Programme for Research and Training in Tropical Disease. John Wiley and Sons Ltd. These plants are not used to control terrestrial molluscs since most of them are dispersed by water and exert a surfactant effect. The book emphasises plants such as Endod (Phytolacca dodecandra which produce a saponin. Most of these appear to work as aquatic molluscicides affecting surface tension at the gills of aquatic snails and leading to toxic haemolytic effects. Evidence suggests that they act by affecting cell membrane integrity Henderson T.O., Farnsworth N.R and Myers T.C. (1987) Biochemistry of recognised molluscicidal compounds of plant origin, Chapter 4, In *Plant Molluscicides,* Ed. K.E. Mott. pp.109-130. Such plants or their extracts are not used to control terrestrial molluscs, which are usually controlled by neurotoxins Henderson I. And Triebskom R. (2002) Chemical control of terrestrial gastropods. *Chapter 12.* In*,Molluscs as Crop Pests,* Ed. G.M. Baker, CABI Publishing, pp.1-31.

In particular, three plants indigenous to Nigeria, i.e. *Detarium microcarpum, Ximenia americana* and *Polygonum limbatum,* are known to have molluscicidal activity against aquatic snails (see Kela *et al.,* Revue Elev. Med. vet. Pays trop., 1989, 42(2), 189-192; Kela *et al.,* Pesticide Outlook, 1995, 6(1), 22-27; Arthur *et al.,* Slug & Snail, Pests in Agriculture BCPC Symposium Proceedings, 66, 389-396, 1996). JP-A-6216477 discloses that extracts of plants belonging to Pittosporaceae, *Polygonaceae, Oleaceae* or *Gramineceae* can be used in a composition to prevent aquatic molluscs from adhering to ships.

As indicated above, it is considered that the molluscicidal activity of the plants on aquatic snails is caused by effects on the gills of the snails. Accordingly, the plants would not have been considered to have a molluscicidal activity on terrestrial molluscs.

WO 00/04781 and US-A-5,290,557 relate to saponin containing plant extracts obtained from *Yucca shidegra, Quillaja saponaria* and *Hedera helix.*

It is desirable to identify a molluscicidal and/or mollusc-repellant agent from a natural source for use on terrestrial molluscs. It is also desirable to identify an effective molluscicidal and/or mollusc-repellant agent from a natural source.

It is also desirable to identify an agent that has a low molluscicidal activity and a high mollusc-repellant activity. By using such an agent, the level of mollusc death is reduced resulting in less disruption to the environment i.e. the numbers and diversity of molluscs and other organisms in the environment is not greatly reduced, but agricultural crops can still be protected.

According to a first aspect of the present invention there is provided the use of plant material derived from a plant in the plant family *Caesalpiniaceae, Olaceae, Polygonaceae* or *Bursecaceae* as a terrestrial molluscicidal and/or mollusc-repellent agent.

It has been found that the use of plant material derived from plants within the above mentioned plant families acts as a molluscicidal and/or mollusc-repellent agent on terrestrial molluscs. It is assumed that the plants contain a molluscicidal and/or a mollusc-repellant activity. The activity may be a single compound or a group of compounds.

The term "terrestrial molluscicidal and/or mollusc-repellant" as used herein means that the agent kills and/or repels a terrestrial mollusc. The term "terrestrial mollusc" as used herein means any mollusc that lives in a terrestrial environment for the majority of its lifetime. Particular examples of terrestrial molluscs include slugs of the genera *Arionidae, Milacidae, Boettgerillidae* and *Limacidae,* and snails of the genera *Helix* or *Cantareus, Bradybaenea, Candidula, Carychium Cecilooides, Cernuella, Cochlicopa, Cepea, Eobania, Discus, Euomphalia, Galba, Helicella, Helicigonia, Helicodiscus, Lacinaria, Monacha, Tymnaea, Retinella, Vertigo, Vitrea Oxychilus, Physa, Succinea, Trichia, Vallonia,* and *Zonitoides.* A particularily preferred terrestrial molluscs is the grey field slug *Deroceras reticulatum.*

Preferably, the plant material is obtained from a plant in the genera *Detarium, Ximenia, Polygonum, Commiphora* or *Boswellia.* In particular, it is preferred that the plant material is obtained from the plant *Detarium microcarpum, Ximenia americana, Polygonum limbatum, Commiphora molmol, Commiphora guidotti (previously referred to by those in the art as Commiphora erythrae)* or a *Boswellia sp.*

*Detarium microcarpum, Ximenia americana* and *Polygonum* limbatum are indigenous to Nigeria and as indicated above are known to have molluscicidal activity against aquatic snails. These three plants are referred to herein as Afribark plants and have been found to have both molluscicidal and mollusc-repellent effects on terrestrial molluscs.

*Commiphora molmol, Commiphora guidotti* and *Boswellia sp.* are indigenous to the "Horn of Africa" (Somalia and Ethiopia). Furthermore, exudates from *Commiphora molmol and Commiphora guidotti ,* when hardened, are known commercially as myrrh and scented myrrh. *Commiphora molmol, commiphora guidotti and Boswellia sp.* are together herein referred to as Odoriferous oleoresins and are known in Africa to repel insects and snakes. This has also been confirmed experimentally. *Commiphora molmol* has been shown to be larvicdal to mosquitoes (Massoud *et al.,* Journal of the Egyptian Society of Paracitology, 30, 101-115, 2000), while *Commiphora guidotti* has been found to have repellent and toxic effects against ticks (Maradufu, Phytochemistry, 21, 677-680, 1982; Carroll *et al.,* Entomol. Exp. Appl., 53, 111-116, 1959). It has now been found that the odoriferous oleoresin have molluscicidal and/or mollusc-repellent activity on terrestrial molluscs. It is particularly preferred that the Odoriferous oleoresins are used as a substantially non-toxic molluscs-repellant. This can be achieved by using a non-toxic concentration of the Odoriferous oleoresins plant material which has mollusc-repellent activity.

The plant material used in the present invention may comprise substantially the whole plant or particular parts of the plant, such as resinous exudates, that have molluscicidal and/or mollusc-repellant activity. Preferred parts include the bark, leaves or shoot of the plant. Preferably, such plant material is ground to particles or to a powder before use. The particles are preferably of a few millimetres in diameter (e.g. from 0.5 to 10 mm in diameter).

Alternatively, it is preferred that the plant material is an extract derived from the plant, wherein the extract has molluscicidal and/or mollusc-repellant activity. The extract is preferably an alcoholic extract and may be obtained using standard procedures for obtaining alcoholic extracts of the plant. In particular, methods for obtaining such an alcoholic extract are described in the methods detailed herein. Alternatively, it is preferred that the plant material is an alcoholic extract of an essential oil of the plant. Essential oils are the volatile, organic constituents of fragrant plant matter. Essential oils are generally extracted from plant by two main methods, distillation (steam, water or dry distillation) and cold pressing. A plant extract containing mainly oils can also be prepared using solvents, carbon dioxide extraction or hydrofluroalkanes. Tincture plant extracts can be made by macerating the plant materials and extracting using aqueous, ethanolic solvents (70%-90% ethanol in water) and left for a period of time, after which the solid debris is filtered.

In a particular preferred embodiment, the plant material is a substantially isolated compound or mixtures of compounds having molluscicidal and/or mollusc-repellent activity. Methods of isolating such compounds are known to those skilled in the art and include chromatographic methods. For example, the essential oils of the plant can be extracted by steam distillation. The oil collected can be dried over anhydrous sodium sulphate and filtered. The oil can then be solubilised in hexane or dichloromethane and analysed using GC/MS and TLC equipment. Further purification of extracts from all sources can be performed using flash column chromatography and solid phase extraction columns. Nuclear Magnetic Resonance and Mass Spectrometry can be used to identify the individual compounds.

The term "substantially isolated" means that the molluscicidal and/or mollusc-repellant compound or compounds are substantially isolated from the plant. Preferably, the molluscicidal and/or mollusc-repellant compound or compounds comprise less than 5% (w/w), more preferably less than 1% (w/w) of contaminating plant material.

The plant material of the present invention is preferably used in combination with a carrier. The type of carrier used will depend on how the plant material is to be used, for example if the plant material is to be used as a spray, it is preferred that the carrier is a suitable aqueous solution such as an alcoholic solution preferably comprising 70 to 90% alcohol in water. Alternatively, if the plant material is to be used as a solid material, any solid carrier can be used such as a powder or a particulate.

It is particular preferred that the plant material is used in combination with a particulate.

The term "particulate" as used herein refers to any substance which is in the form of particles which are of a sufficient size so as to act as an irritant to the movement of a terrestrial mollusc. In particular, it is preferred that the particulate is sand, sharp sand, pumice granules, sawdust, woodchips or corn cob chips. The particles, or at least the majority of the particles (for example about 90% of the particles by weight), are preferably between about 0.5 and 5 millimetres in diameter.

It is particularly preferred that the particulate is either sawdust or sharp sand.

The plant material may be used in combination with a particulate by mixing the plant material with the particulate. Preferably, when the plant material is in a solid form, it is formed into particles of approximately the same size as the particulate. Alternatively, when the plant material is in a liquid form, preferably the particles are sprayed with the plant material.

It has been found that by combining the plant material with a particulate that better protection of plants is obtained. It appears that the combination of the plant material and the particulate forms a barrier to the molluscs. Therefore, by distributing the plant material in combination with the particulate around plants to be protected, a barrier will be formed protecting the plants from molluscs.

In particular, it has been found that when plant material derived from plants of the plant family *bursecaceae* is used in combination with a particulate that a sticky glue-like glutinous consistency is obtained having a pungent aromatic smell (similar to balsamic). When molluscs come in contact with this composition, they adhere to it and if they cannot escape, they will eventually become dehydrated. Accordingly, the combination of such plant material with a particulate acts as a very good barrier to protect plants. The use of a particulate also has the added advantage of improving the friability, drainage and tilth of the soil. Furthermore, some particulates, e.g. sawdust and corncob, are biodegradable and degrade into a mulch which improves the soil.

In an alternative preferred embodiment, when the plant material is in a liquid form, it is preferably sprayed. Generally, when the plant material is an extract of the plant or is a substantially isolated compound or mixture of compounds having molluscicidal and/or mollusc-repellent activity, then it is preferably in a formulation capable of being sprayed. The advantage of spraying the plant material is that it can be then easily delivered over large areas. Furthermore, the plant material can be sprayed onto soil, plants or seeds in order to kill and/or repel molluscs. Preferably, when the plant material is in a formulation capable of being sprayed it is sprayed on to plants or seeds. The plant material may also be applied to surfaces to repel molluscs from the surfaces. The plant material may be made into suitable preparations for applying to surfaces such as paint-like preparations which can be painted or sprayed onto surfaces.

In a further embodiment of the present invention, the plant material is preferably used in conjunction with an effector agent.

The effector agent may be any agent which provides a beneficial effect to the plant or crop being protected from the molluscs. Suitable effector agents include fertilisers and complementary pesticides.

The plant material and effector agent may be used in conjunction by using them simultaneously, sequentially or separately. Preferably, the plant material and the effector agent are combined together and used simultaneously.

According to a second aspect of the present invention, there is provided a molluscicidal and/or mollusc-repellent preparation comprising plant material derived from *Commiphora molmol* or *Commiphora guidotti,* wherein the material is in the form of particles or a powder.

The term "plant material" is as defined above with respect to the first aspect of the present invention.

It is particularly preferred that the preparation according to the second aspect of the present invention comprises at least 5% (w/w), more preferably at least 20% (w/w) and most preferably at least 60% (w/w) of a carrier. As indicated above, the type of carrier used will depend on the preparation.

It is preferred that the carrier is a particulate as defined above with respect to the first aspect of the present invention.

The preparation according to the second aspect of the present invention may additionally comprise an effector agent. The effector agent is as defined above with respect of the first aspect of the present invention.

The preparation according to the second aspect of the present invention may be used as a molluscicidal and/or mollusc-repellant of both aquatic and terrestrial molluscs.

It is particularly preferred that the preparation according to the second aspect of the present invention is a preparation for applying to surfaces such as paint-like preparations which can be painted or sprayed onto surfaces. It is also preferred that the preparation is used in a aqueous environment by, for example, applying it to boat hulls the sides of docks or fishing nets. Paint compositions comprising chemical molluscicidal and/or mollusc-repellent agents are known and one skilled in the art could modify these known paint compositions by incorporating the plant material as defined above.

It is preferred that when the preparation is used in a terrestrial environment, it is either applied as a solid particulate.

According to a third aspect of the present invention, there is provided a terrestrial molluscicidal and/or mollusc-repellent preparation comprising plant material wherein the plant material has molluscicidal and/or mollusc-repellent activity and a particulate, wherein the plant material is obtained from a plant in the plant family *Caesalpiniaceae, Olaceae, Polygonaceae* or *Bursecaceae.*

The term "plant material" is as defined above with respect to the first aspect of the present invention.

The term "particulate" is also as defined above with respect to the first aspect of the present invention.

It has been found that by combining the plant material with a particulate that an improved composition is obtained having greater molluscicidal and/or mollusc-repellent activity. In particular, it has been found that the preparation acts as a barrier. The preparation can therefore be used to protect plants from molluscs. As indicated above, the use of a particulate also has the added advantage of improving the friability, drainage and tilth of soils.

It is preferred that the plant material and the particulate are used in combination as defined above with respect to the first aspect of the present invention.

The preparation according to the third aspect of the present invention may also comprise an effector agent. The effector agent is as defined above with respect to the first aspect of the present invention.

It is further preferred that the plant material is obtained from the plant in the genera *Detarium, Ximenia, Polygonum, Commiphora* or *Boswellia.*

It is particularly preferred that the plant material is obtained from *Detarium microcarpum, Ximenia americana, Polygonum limbatum, Commiphora molmol, Commiphora guidotti* or a *Boswellia sp.*

It is most preferred that the plant material is obtained from *Commiphora molmol* or *Commiphora guidotti .*

The present invention also comprises the use of a preparation according to the third aspect of the present invention as a terrestrial molluscicidal and/or mollusc-repellent. It is particularly preferred that the preparation is used as a non-toxic mollusc-repellant.

The preparation can be used in order to protect plants from molluscs but may also be used in order to ensure that molluscs do not enter particular areas, such as paths or even into buildings.

The present invention is now described, by way of example only, with reference to the accompanying figures in which:
Figure 1 shows the effect of Afribark plants (100%) on crop protection applied as a barrier (days 1 to 7),
Figure 2 shows the effect of Afribark plants (100%) on slug mortality applied as a barrier(days 1 to 7),
Figure 3 shows the results of the caged field trials using Afribark plants on crop protection,
Figure 4 shows the results of the caged field trials using Afribark plant on slug mortality (day 14), Figure 5 shows the effect of Commiphora molmol (100%) on seed germination,
Figure 6 shows the effect of Commiphora molmol (100%) on coleoptile length,
Figure 7 shows the results of the caged field trials using Somali Oleoresins on crop protection,
Figure 8 shows the results of the caged field trials using Somali Oleoresins on slug mortality (day 14),
Figure 9 shows effect of Somali Oleoresins (100%) on crop protection,
Figure 10 shows effect of Somali Oleoresins (100%) on slug mortality,
Figure 11 shows effect of *Commiphora molmol*/substrate barriers on crop protection,
Figure 12 shows effects of *Commiphora molmol*/substrate barriers on slug mortality,
Figure 13 shows effects of *Commiphora molmol*/corn cob mixes on crop protection,
Figure 14 shows effects of *Commiphora molmol*/corn cob mixes on slug mortality.

Figure 15 shows effect of *Commiphora molmol* on crop protection using peat soil substrate when applied as a barrier.

Figure 16 shows effect of *Commiphora molmol* oleoresins on mortality using peat soil substrate when applied as a barrier.

Figure 17 shows effect of ethanolic *Commiphora molmol* extracts on the feeding behaviour of D.reticulatum.

Figure 18 shows effect of the hexane extract of *Commiphora molmol* on the feeding behaviour of D.reticulatum.

Figure 19 shows effect of the essential oil extract of *Commiphora guidotti* (Aldrich) on the feeding behaviour of D.reticulatum.

Figure 20 shows effect of *Commiphora molmol* substrates mixes on crop protection applied as a barrier.

### EXAMPLES

### Example 1

### Materials and Methods

### Effect of Afribark Plant Raw Materials applied as a Barrier

Before plant materials were used for repellency testing or extraction, they were first ground to a powder using a Braun *Multiquick* hand blender.

Plant Raw Materials Tested: *Detarium microcarpum* bark, *Ximenia americana* leaf, *Ximenia americana* bark and *Polygonum limbatum* shoot. All the Nigerian plants were supplied by Dr S.L.Kela, from the Abubakar Tafawa Balewa University, Bauchi, Nigeria.

### Effect of Plant Raw Material/Sawdust Mixes applied as a Barrier

Plant Raw Material/Sawdust Mixes Tested: *Detarium microcarpum* bark/Sawdust (50:50) and *Ximenia americana* bark/Sawdust (50:50).

The sawdust used is Lignocell -grade ¾ supplier:RS Biotech.

The 50% plant raw material sawdust mixes were prepared by mixing 25g of the plant bark powder with 25g of sawdust and blending in a polythene bag for 2 minutes.

### Effect of Alcoholic Plant Extracts on Sawdust applied as a Barrier

Alcoholic Plant Extracts on Sawdust Tested: methanolic *Detarium microcarpum* bark on Sawdust, ethanolic *Detarium microcarpum* bark on sawdust, methanolic *Ximenia americana* bark on sawdust and ethanolic *Ximenia americana* bark on sawdust.

The alcoholic plant extracts (30%) were prepared by adding 100ml of ethanol (absolute), or methanol (HPLC grade), to a 250ml-glass beaker containing 30g of finely powdered raw material. The mixtures were stirred for 3 hours and then left overnight, at room temperature, in a dark cupboard.

The samples were filtered through a Buchner flask, under vacuum, transferred to suitable containers and stored at 4°C until required.

The alcoholic plant extract was coated onto the sawdust by adding 100ml of the alcoholic extract to 20g of sawdust and agitated with a spatula to get a homogenous coating. This was then blended in a polythene bag for 2 minutes. The sawdust coated with alcoholic plant extract was allowed to air dry overnight, at room temperature.

Controls for the "alcoholic" sawdust were prepared similarly by coating sawdust with solvents (methanol and ethanol), instead of the alcoholic plant extracts.

### Method

Plastic trays (0.07m²) were lined with unbleached blotting paper and saturated with de-ionised water. Three groups of eight winter wheat seeds were placed into each tray and each group surrounded with approximately 1 - 2 g of test material, forming a barrier with approximately 1cm diameter. Four slugs (*Deroceras reticulatum*) pre-starved for 24-48 hours were introduced to the trays. The tests were performed under controlled conditions (12 hours light 15°C: 12 hours dark 15°C, 90 % humidity). Five replicates were prepared per condition.

The trays were observed daily, for seven days, for seed hollowing and mortality. After the seven days, the slugs were replaced with naive slugs and the test run for a further seven days. Mortality was indicated by failure to respond to 12-volt D.C. stimuli.

Note: i) In all the experiments, a negative control was prepared consisting of slugs only, sawdust only, or "alcoholic" sawdust. ii) Metaldehyde (4%) was used as a positive control, to compare the toxicity properties of the 100% plant raw materials, rather than as a physical barrier.

### RESULTS

### Plant Raw Materials

### Effect of Plant Materials on Crop Protection Applied as a Barrier

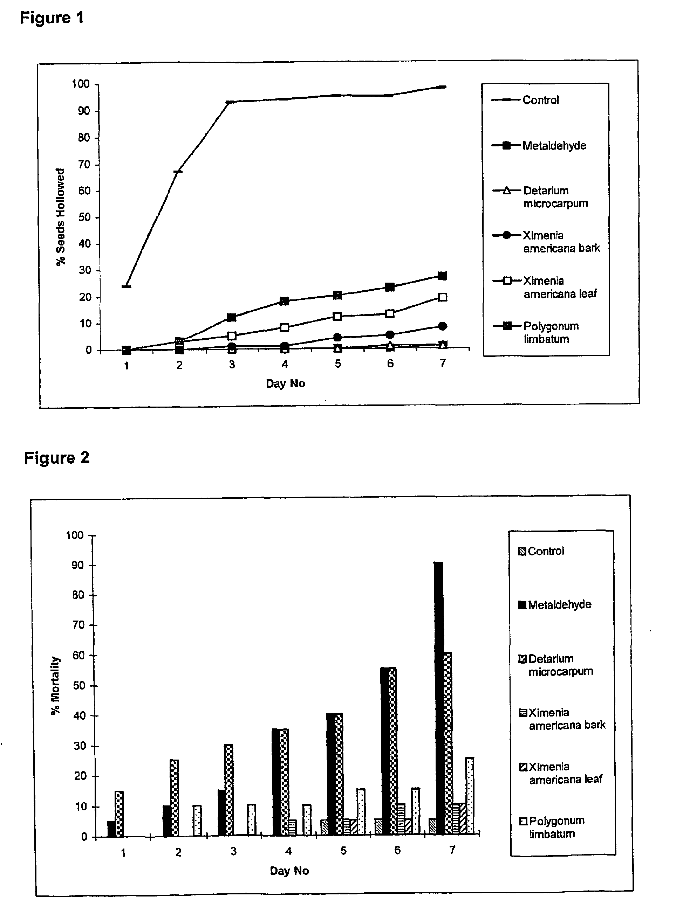

For the first seven days both metaldehyde (4%) and *Detarium microcarpum* bark showed excellent crop protection yielding only 1% seed hollowing (see Figure 1).

*Ximenia americana* bark and leaf also showed excellent qualities as a barrier giving 8% and 18% seed hollowing, respectively.

*Polygonum limbatum* shoot showed some crop protection properties with 27% seed hollowing.

For days 8 to 14, *Detarium microcarpum* bark again showed the best crop protection, out of all the plant materials (6%). *Ximenia americana* bark gave the next best crop protection with very low seed hollowing (12%).

*Ximenia americana* leaf and *Polygonum limbatum* shoot showed less protection with higher number of seeds being hollowed (48% and 50% respectively).

### Effect of Plant Materials on Slug Mortality Applied as a Barrier

For the first seven days metaldehyde (4%) showed the greatest molluscicidal activity (90%), followed closely by *Detarium microcarpum* bark (60%) (see Figure 2). Excessive secretion of mucus was observed on slug contact with both of these materials. *Ximenia americana* bark, *Ximenia americana* leaf and *Polygonum limbatum* shoot did not show great molluscicidal activity yielding slug mortalities of 10%, 10% and 25% slug respectively.

For days 8 to 14, metaldehyde (4%) showed the greatest activity with 100% slug mortality. Low slug mortalities were observed for all the plant materials. The highest plant activity being for *Ximenia americana* bark (30%). Surprisingly, *Detarium microcarpum* bark showed very low activity (10%), with *Ximenia americana* leaf and *Polygonum limbatum* shoot showing slug mortalities of 5% and 15% respectively, over the next 7 days (8-14).

### Plant Raw Material/Sawdust Mix (50%)

### Effect of Plant Raw Material/Sawdust Mix (50%) On Crop Protection Applied as a Barrier

The 50% *Ximenia americana* bark /sawdust mix showed excellent crop protection properties, over the 7 day period, with only 10% seed damage.

The 50% *Detarium microcarpum* bark/sawdust mix over the same 7 day period gave poor crop protection with a much high number of seeds being hollowed (51 %).

The 50% *Ximenia americana* bark /sawdust mix gave good crop protection, over next 7 days (8-14), resulting in only 28% seed hollowing.

The 50% *Detarium microcarpum* bark/ sawdust mix again showed some crop protection properties (38% seed hollowing.)

### Effect of Plant Raw Material/Sawdust Mix (50%) On Slug Mortality Applied as a Barrier

For the first seven days the 50% *Ximenia americana* / sawdust mix showed significant molluscicidal activity (40%). Over the same 7 day period the 50% *Detarium microcarpum* bark / sawdust exhibited very poor molluscicidal properties (5%).

Both the 50% *Ximenia americana* bark and *Detarium microcarpum* bark sawdust mixes gave poor molluscicidal activity (15 and 5% respectively).

### Alcoholic Plant Extracts on Sawdust

Comparison of control 1 (no barrier) with the controls 2 -4 (sawdust only, ethanolic and methanolic sawdust) showed that significant crop protection was obtained using sawdust, as a mechanical barrier, over the first 3 days.

No significant difference in crop protection was observed, over the 7 days, between using sawdust only and the alcoholic treated sawdust.

For the first 7 days, sawdust treated with the alcoholic extracts of *Ximenia americana* bark showed excellent crop protection, with only 3 and 12% of the seeds being hollowed. The sawdust treated with the ethanolic and methanolic extracts of *Detarium microcarpum* bark also gave significant crop protection, compared to the controls, yielding 36% and 49% seed hollowing at day 7.

For days 8-14 sawdust treated with ethanolic *Ximenia americana* bark and methanolic *Detarium microcarpum* bark showed the best crop protection properties, in particular up to day 11 showing only 24% and 27% seed hollowing. The seed hollowing for these two plant extracts increasing to 32 and 39 % seed hollowing at day 14.

No significant slug mortality was observed for the sawdust treated with plant extracts, over the 7 days, compared to the controls. However, over the next 7 days (days 8-14) significant slug mortality was observed for the sawdust treated with ethanolic *Ximenia americana* bark and the sawdust treated with methanolic *Detarium microcarpum* bark. They showed 45% and 40% slug mortality respectively compared to the control 1-no barrier (25%).

### Example 2

### Laboratory Terraria Studies using Peat Soil as Substrate

### Materials and Method

The procedure was identical to that described for example 1, except the blotting paper was replaced with 200g of peat soil and saturated with tap water. Four replicates were performed, per condition. Data monitoring was only performed for 7 days.

### RESULTS

### Plant Raw Materials (100%)

*Ximenia americana* bark (100%) showed significant crop protection, over the first 3-5 days, compared to the controls showing 34 and 55% seed hollowing respectively.

*Detarium microcarpum* bark (100%) showed poor crop protection almost immediately. Slug mortality was found to be insignificant for both plant materials.

The use of peat as substrate resulted in the chemicals being absorbed vertically downwards, thereby providing a smaller chemical barrier than that provided by using blotting paper, blotting paper results in a secondary chemical barrier due to horizontal outward leaching of the chemicals.

This is a more realistic scenario, as the absorptive behaviour of the soil substrate on the leached phytochemicals should be taken into account, when testing plant based barriers.

This laboratory test, however, is the worst case scenario because it is a no choice feeding test. In a real situation the slugs would be repelled towards a more attractive plant. Furthermore, the slugs had been pre-starved for 48 hours and will therefore be inclined to eat even a poisonous plant.

### Example 3

### SPLIT SUBSTRATE TEST

### Method

Split substrate tests were conducted according to the method of Bowen and Antoine (1995). A 9cm filter paper was cut in half and both pieces placed in a plastic petri dish (9cm diameter, vented), leaving approximately a 2mm gap. One side of the filter paper was saturated with approximately 1 ml of de-ionised water (Control) was added and to the other half saturated with approximately 1ml of the aqueous plant extract. One test slug was placed on the control filter paper side and the petri dish lid placed on top and left for 24 hours in a controlled environment (12 hour light 15°C: 12 hour dark 15 °C 90% humidity). Ten replicate petri dishes were prepared.

After 24 hours the location of the slug, the state of the filter paper and whether the slug was alive were recorded. Death was confirmed if the slug did not respond to an electrical stimuli from a 12 volt source. The slugs were removed and the filter papers washed with tap water. Excess water was removed and the filter papers dusted with finely powdered charcoal and left for another 24 hours. The charcoal was washed off with tap water, to reveal a black slug slime trail.

The filter papers were allowed to air dry and digital photographs taken of each petri dish. The total area of the filter paper covered by the slug on both filter papers was determined using an Image analyser software (Sigma Scan 4) which calculates the number of black pixels in a given area. This can be converted to a percentage, which enables us to approximate the time spent on the each side.

### Preparation of Aqueous Plant Extracts (10%)

The aqueous extracts were prepared by weighing, approximately, 1g of the dried plant extract and dissolving them in 10 ml of de-ionised water.

Solutions were either mixed with a magnetic stirrer or placed in an ultrasonic bath for 5 minutes to aid dissolution. All solutions were found to dissolve readily in water yielding a frothy layer on top, on shaking.

### RESULTS

### Split Substrate Test

### Image Analysis Data

**Table 1. Detarium microcarpum Aqueous Extract (10%)**

| **Petri-dish No.** | **Slug Trail Area Untouched** | **Slug Trail Area Covered** | **% Area covered by slug** |
|---|---|---|---|
| 10 | 185399 | 1042 | 1 |
| 9 | 199011 | 8587 | 4 |
| 8 | 189481 | 0 | 0 |
| 7 | 206363 | 3447 | 2 |
| 6 | 202305 | 0 | 0 |
| 5 | 206363 | 4058 | 2 |
| 4 | 202916 | 0 | 0 |
| 3 | 206363 | 16882 | 8 |
| 2 | 197776 | 7352 | 4 |
| 1 | 205321 | 20964 | 10 |
| **Mean** | **200130** | **6233** | **3** |

| | | | |
|---|---|---|---|
| * Dead slug was found in petri dish no.9. The slug was found to excrete an excess of slime as it entered the active sector of the filter paper. The slug did not move far from the interface part of the filter paper. | | | |

**Table 2. Ximenia americana bark Aqueous Extract (10%)**

| **Petri-dish No.** | **Slug Trail Area Untouched** | **Slug Trail Area Covered** | **% Area covered by slug** |
|---|---|---|---|
| 10 | 166752 | 39611 | 3 |
| 9 | 202149 | 4214 | 1 |
| 8 | 188487 | 17876 | 16 |
| 7 | 190527 | 15836 | 2 |
| 6 | 176384 | 29979 | 10 |
| 5 | 186409 | 19954 | 15 |
| 4 | 202880 | 3483 | 8 |
| 3 | 172527 | 33836 | 9 |
| 2 | 204465 | 1898 | 2 |
| 1 | 199897 | 6466 | 19 |
| **Mean** | **189048** | **17315** | **8** |

**Table 3. Ximenia americana leaf Aqueous Extract (10%)**

| **Petri-dish No.** | **Slug Trail Area Untouched** | **Slug Trail Area Covered** | **% Area covered by slug** |
|---|---|---|---|
| **10** | 190760 | 15603 | 8 |
| **9** | 201857 | 4506 | 2 |
| **8** | 190702 | 15661 | 8 |
| **7** | 196133 | 10230 | 5 |
| **6** | 190338 | 16025 | 8 |
| **5** | 174663 | 31700 | 15 |
| **4** | 194429 | 11934 | 6 |
| **3** | 177861 | 28502 | 14 |
| **2** | 185820 | 20543 | 10 |
| **1** | 199403 | 6960 | 3 |
| **Mean** | **190197** | **16166** | **8** |

**Table 4. Polygonum limbatum shoot Aqueous Extract (10%)**

| **Petri-dish No.** | **SlugTrail Area Untouched** | **Slug Trail Area Covered** | **% Area covered by slug** |
|---|---|---|---|
| **10** | 159199 | 47164 | 2 |
| **9** | 204629 | 20030 | 1 |
| **8** | 204693 | 17419 | 1 |
| **7** | 204734 | 28888 | 1 |
| **6** | 192786 | 35131 | 6 |
| **5** | 171232 | 13577 | 19 |
| **4** | 177475 | 1629 | 16 |
| **3** | 188944 | 1670 | 9 |
| **2** | 186333 | 1734 | 11 |
| **1** | 159199 | 4413 | 29 |
| **Mean** | **184922** | **17166** | **9** |

**Table 5. Control (Water)**

| **Petri-dish No.** | **SlugTrail Area Untouched** | **Slug Trail Area Covered** | **% Area covered by slug** |
|---|---|---|---|
| **10** | 19370 | 186993 | 91 |
| **9** | 113617 | 92746 | 45 |
| **8** | 106658 | 99705 | 48 |
| **7** | 126976 | 79387 | 38 |
| **6** | 123528 | 82835 | 40 |
| **5** | 117439 | 88924 | 43 |
| **4** | 62442 | 143921 | 70 |
| **3** | 86736 | 119627 | 58 |
| **2** | 74632 | 131731 | 64 |
| **1** | 121334 | 85029 | 41 |
| **Mean** | **95273** | **111090** | **54** |

### Discussion

### Split Substrate Test

The split substrate test, generally, gave a good indication of whether a plant extract had repellent, attractant or neutral properties.

Interpretation of the patterns of cover, in the control and active sectors, showed that the greatest repellency effect was observed for *Detarium microcarpum.* The filter paper area covered by the slug was only 3% when it was saturated with *Detarium microcarpum* bark aqueous extract. Molluscicidal activity was also found for this plant extract, as one slug was found dead in the active sector (petri dish no.9).

*Ximenia americana* (leaf and bark) and *Polygonum limbatum* shoot also showed substantial repellency properties with only 8%, 8% and 9% of the active filter paper sectors being covered by the slug slime.

The control (water only), as expected, did not show a differential between the two sectors of filter paper. The slugs spent almost equal time on both halves of the filter papers (54%: 46%).

### Example 4

### CONTACT TOXICITY TEST

This was a simple, but effective screening test, which gave a clear indication of whether the naturally occurring plant raw materials were toxic, on contact, to the target organism, *Deroceras reticulatum.*

### Method

Enough raw plant material powder (about 3.5g) was added to fill a third of a glass test tube (3" X 1 This was saturated with approximately 4ml of de-ionised water. To each test tube one slug was introduced and moist cotton wool used to force contact with the plant material. The test tubes were stoppered with cork tops and placed in a environmentally controlled room (12h light: dark regime 15°C, 90% humidity).

Ten replicates were prepared.

Mortality was assessed hourly for the first five hours, thereafter, monitored for twelve and twenty four hours.

### Results

**Table 6. Ximenia americana bark**

| **Test Tube No.** | **1 hour** | **2 hours** | **3 hours** | **4 hours** | **5 hours** | **12 hours** | **24 hours** |
|---|---|---|---|---|---|---|---|
| 1 | A | A | A | P | D | D | D |
| 2 | A | A | A | P | D | D | D |
| 3 | A | A | A | D | D | D | D |
| 4 | A | A | A | A | A | D | D |
| 5 | A | A | A | A | A | A | D |
| 6 | A | A | A | A | A | A | D |
| 7 | A | A | A | D | D | D | D |
| 8 | A | A | A | A | A | A | D |
| 9 | A | A | A | A | A | A | D |
| 10 | A | A | A | A | A | D | D |

**Table 7. Detarium microcarpum bark**

| **Test Tube No.** | **1 hour** | **2 hours** | **3 hours** | **4 hours** | **5 hours** | **12 hours** |
|---|---|---|---|---|---|---|
| 1 | A | A | A | A | A | D |
| 2 | A | A | A | A | P | D |
| 3 | A | A | P | P | P | D |
| 4 | A | A | A | A | A | D |
| 5 | A | P | D | D | D | D |
| 6 | A | A | A | A | D | D |
| 7 | A | P | D | D | D | D |
| 8 | A | A | A | P | D | D |
| 9 | A | A | A | A | A | D |
| 10 | A | A | A | P | D | D |

**Table 8. Ximenia americana leaf**

| **Test Tube No.** | **1 hour** | **2 hours** | **3 hours** | **4 hours** | **5 hours** | **12 hours** | **24 hours** |
|---|---|---|---|---|---|---|---|
| 1 | A | A | P | P | P | D | D |
| 2 | A | A | A | A | A | D | D |
| 3 | D | D | D | D | D | D | D |
| 4 | A | A | A | P | A | D | D |
| 5 | P | P | D | D | D | D | D |
| 6 | A | A | A | A | A | P | D |
| 7 | A | A | A | A | A | D | D |
| 8 | A | A | A | A | P | D | D |
| 9 | A | A | A | A | A | P | D |
| 10 | A | P | D | D | D | D | D |

**Table 9. Polygonum limbatum shoot**

| **Test Tube No.** | **1 hour** | **2 hours** | **3 hours** | **4 hours** | **5 hours** | **12 hours** | **24 hours** |
|---|---|---|---|---|---|---|---|
| 1 | A | A | A | A | A | D | D |
| 2 | A | A | P | D | D | D | D |
| 3 | A | A | A | A | A | A | D |
| 4 | A | A | A | A | A | D | D |
| 5 | A | A | A | A | A | A | D |
| 6 | A | A | A | A | A | A | A |
| 7 | A | A | A | A | A | A | D |
| 8 | A | A | A | A | A | P | P |
| 9 | A | A | A | A | A | D | D |
| 10 | A | A | A | A | A | A | D |

**Table 10. Sand (Control)**

| **Test Tube No.** | **1 hour** | **2 hours** | **3 hours** | **4 hours** | **5 hours** | **12 hours** | **24 hours** |
|---|---|---|---|---|---|---|---|
| 1 | A | A | A | A | A | A | A |
| 2 | A | A | A | A | A | D | D |
| 3 | A | A | A | A | A | A | A |
| 4 | A | A | A | A | A | A | D |
| 5 | A | A | A | A | A | A | A |
| 6 | A | A | A | A | A | A | A |
| 7 | A | A | A | A | A | A | A |
| 8 | A | A | A | A | A | A | A |
| 9 | A | A | A | A | A | A | A |
| 10 | A | A | A | A | A | A | A |

| | | | | | | | |
|---|---|---|---|---|---|---|---|
| Note: A = alive, P = paralysed, D = dead | | | | | | | |

### Discussion Of Results

### Contact Toxicity Test

The most potent plant molluscicide, on contact, was found to be 100% *Detarium microcarpum* bark, showing 100% mortality in 12 hours, when applied as a barrier.

This was closely followed by *Ximenia americana* bark and leaf, both resulting in 100% mortality in 24 hours. *Polygonum limbatum* shoot also gave substantial slug mortalities (90%). Sand was found to be a suitable, negative, control with only 20% slug mortality over 24 hours.

### Example 5

### CAGED FIELD TRIALS (Afri-bark Plants)

### MATERIALS AND METHODS

Test materials used: *Ximenia americana* bark (100%) (supplier: S.K Kela, Nigeria), *Detarium microcarpum* bark (100%) (supplier: S.K Kela, Nigeria) and Control: No barrier.

### Method

Caged field trials were conducted in 1m² hardwood arenas containing, with rigid pvc foam core side panels (200mm high). Fluon (polytetrafluoroethylene) was applied to the sides, of the cages, to contain the slugs within the testing arena.

The enclosures were filled, with medium loam soil, to a depth of approximately 5-6 cm and four young lettuce seedlings planted. Organic lettuce seedlings (cultivar "all year round") were transplanted into the cages when they had 4-8 true leaves.

Each lettuce was surrounded with a physical barrier consisting of 15g of test material.

A known population of slugs (10) were introduced into each arena to represent a "heavy infestation", equivalent to 100,000 slugs per hectare. The trial was run over a 14 day period.

### Results

### Caged Field Trials (Afribark Plants)

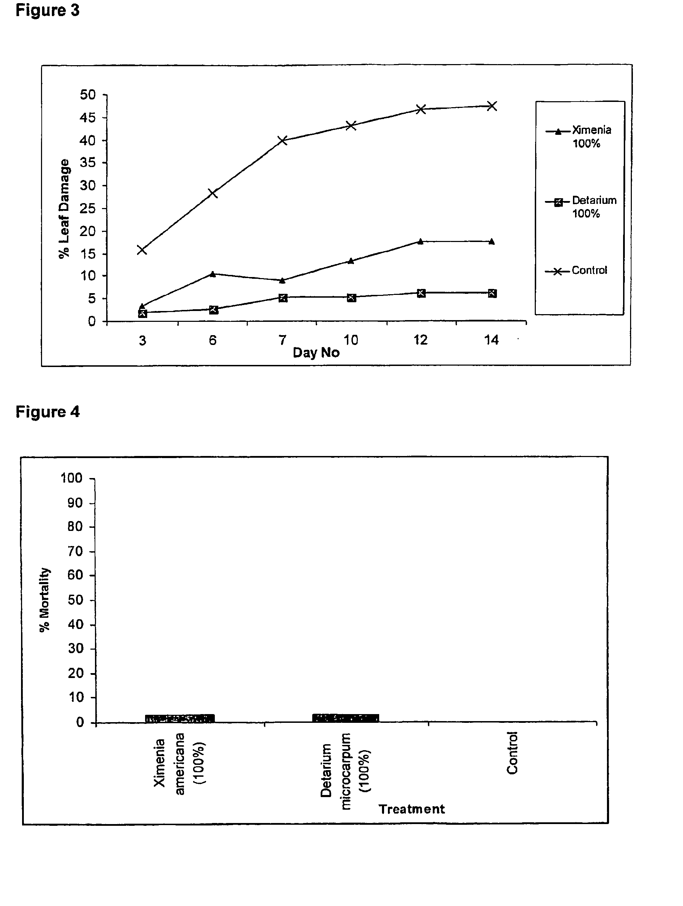

In the caged field trial evaluation both of the "Afribark" plants showed excellent crop protection properties, over the first 7 days (see Figure 3).

Both *Ximenia americana* and *Detarium microcarpum* barks, suppressed feeding, to levels, well below that of the control. During the second week, the plant barriers, continued to reduce leaf damage significantly, compared to the control. Even though there was a heavy rainfall on day 6 of the trials, the Afribark plant barriers had a significant effect, in improving crop protection, over the 14 day period (see Figures 3 and 4).

### CONCLUSIONS: Afribark Plants

Sand and Spruce sawdust were found to be very good substrates for use as an inert barriers, and are therefore suitable as a diluent to reduce the potency of the plant materials used.

*Detarium microcarpum* (100%) was found to be the best plant material, applied as a barrier, giving excellent crop protection over a fourteen day period. This raw material was just as good as the commercial product, metaldehyde (4%), in reducing seed hollowing.

Both *Ximenia americana* bark and leaf (100%), applied as a barrier, showed very good crop protection for the first seven days. *Polygonum limbatum* shoot also gave good crop protection.

*Detarium microcarpum* (100%), applied as a barrier, was found to possess excellent molluscicidal properties for the first seven days.

The 50% *Ximenia americana* bark/sawdust mix barrier showed excellent crop protection properties over 14 days. The 50% *Detarium microcarpum* bark/sawdust mix barrier showed poor crop protection properties over the 14 day time period.

The 50% *Ximenia americana* bark/sawdust mix barrier showed good molluscicidal properties over the 7 days. The 50% *Detarium microcarpum* /sawdust mix barrier exhibited poor molluscicidal properties, over the same time period.

No significant difference, in crop protection, was observed between sawdust and alcohol treated sawdust.

The sawdust barriers treated with a methanolic and ethanolic extract of *Ximenia americana* bark showed excellent crop protection , over a 7 day period.

The sawdust barriers treated with a methanolic and ethanolic extract of *Detarium microcarpum* bark showed significant crop protection over a 14 day period.

No significant slug mortality was observed for the alcoholic plant extracts for the first 7 days. For the 8-14 day period, however, the sawdust barriers treated with ethanolic *Ximenia americana* bark extract and *Detarium microcarpum* bark extract showed excellent slug mortality properties compared to the controls.

Split substrate tests confirmed the plant material *Detarium microcarpum* bark to be the best candidate for use as a slug repellent. The slugs did not venture much on the active sector of the filter paper, saturated with a 10% aqueous extract of this plant. *Ximenia americana* bark and leaf as well as *Polygonum limbatum* shoot also showed excellent repellency properties.

Contact toxicity tests again confirmed *Detarium microcarpum* to be the best candidate as a contact plant molluscicide, killing 100% of the slugs in 12 hours. *Ximenia americana* bark and leaf also showed excellent contact molluscicidal properties, killing all the slugs in 24 hours.

*Polygonum limbatum* shoot possessed significant molluscicidal activity.

The caged field trial evaluation of the "Afribark" plants showed excellent crop protection properties, over the first 14 days, with both *Ximenia americana* and *Detarium microcarpum* barks, suppressing feeding, to levels, well below that of the control (see Figures 3 and 4).

### TESTING OF ODORIFEROUS OLEORESINS

### Example 6

### LABORATORY TERRARIA TEST

### Materials and Methods

### Effect of Oleoresin Materials (100%) Applied as a Barrier

Oleoresin Materials Tested: *Commiphora molmol* (grain size, supplier: Baldwin) and *Commiphora guidotti* (irregular size, supplier Somalia).

### Effect of Oleoresin Materials /Sawdust Mix (60:40) Applied as a Barrier

Oleoresin Materials /Sawdust Mixes Tested:*Commiphora molmol*/Sawdust (60:40) and *Commiphora guidotti* /Sawdust (60:40).

### Effect of Oleoresin Essential Oil (0 5% and 1.0%) extracts on Sawdust Applied as a Barrier

Materials tested:*Commiphora molmol* essential oil (100%)(supplier: Tisserand). The essential oil was diluted to 0.5% and 1.0% with absolute ethanol.

### Effect of Different Substrates Mixed with Commiphora molmol Oleoresins

Commiphora molmol/ Corn Cob mixes tested: (50:50) Corn Cob supplier R S Biotech.

Commiphora molmol/ sawdust: (60:40) Sawdust Lignocell 2/2 supplier R S Biotech.

Commiphora molmol/sharpsand (60:40) Sharpsand supplier Wickes Ltd.

### Effect of Different Concentrations of Commiphora molmol with Corn Cob

Commiphora molmol/Corn Cob mixes tested: (20:80) (30:70) (40:60) Corn Cob supplier R S Biotech.

### Method

The method is identical to that used in Example 1 above.

### Results

### Somali Oleoresins (100%)

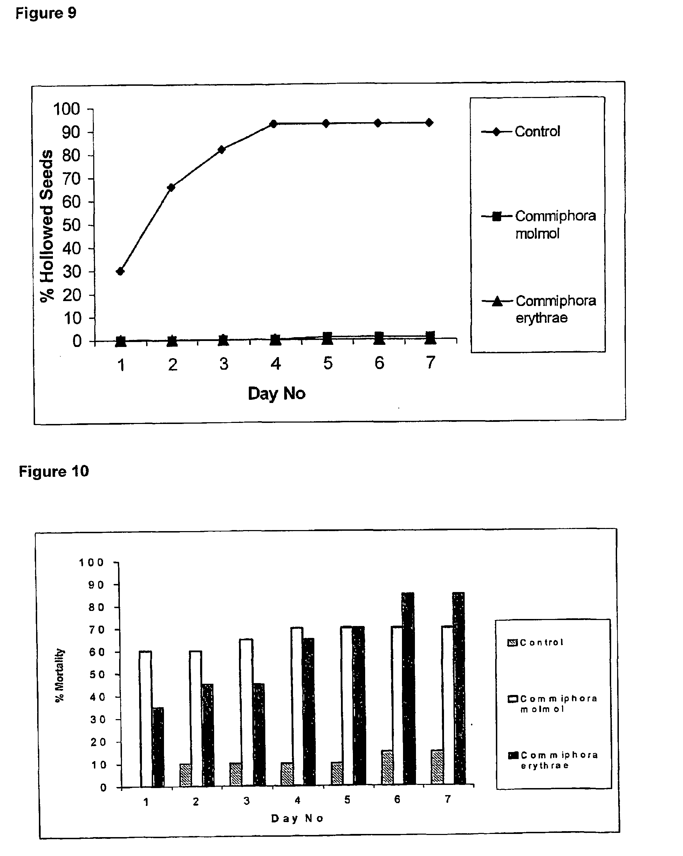

Both *Commiphora molmol* and *Commiphora guidotti* showed excellent crop protection (see figure 9).

Substantially high slug mortalities were obtained in the first week, for both the oleoresins (see figure 10).

### Somali Oleoresins /Sawdust (60% mix)

A *Conimiphora molmol* and sawdust 60% mix proved to be an effective barrier, giving excellent crop protection over the 11 days.

Low slug mortalities were obtained over this test period.

### Effect of Different Substrates Mixed with Commiphora molmol Oleoresins

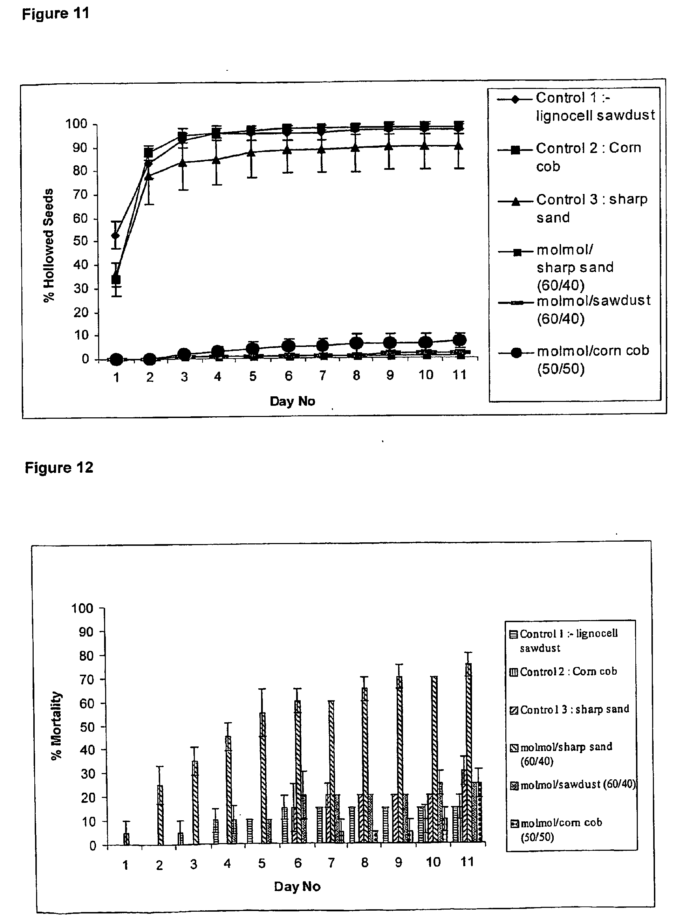

All substrates tested with Commiphora molmol gave excellent crop protection over an eleven day period compared to the controls. Crop damage was negligible (see figure 11).

Mixes with sharp sand gave over 70% mortality. Sharp sand itself may be contributory since sharp sand on its own as a control gave about 35% mortality (see Figure 12).

### Effect of Different Concentrations of Commiphora molmol with Corn Cob

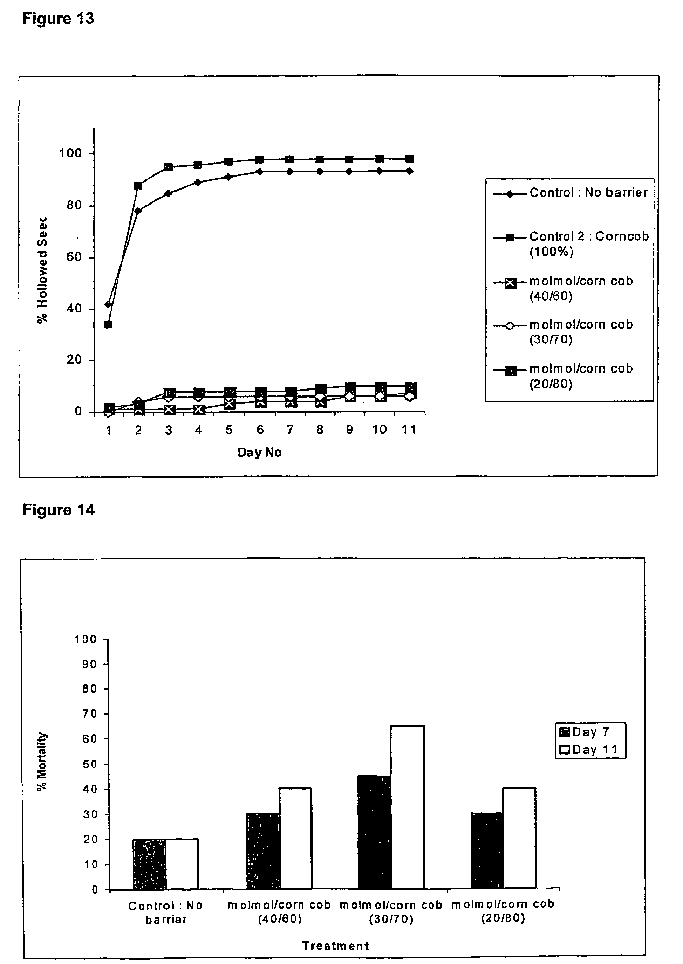

All concentrations of Commiphora molmol with Corn Cob gave excellent crop protection over an eleven day period compared to the controls. Crop damage was below 10% (see figure 13).

Mortalities between 40% and 60% were achieved over an eleven day period (see figure14).

### Results: Somali oleoresin essential oil extracts

Both the 1% and 0.5% ethanolic extracts of *Commiphora molmol* oil coated onto sawdust was found to have significant crop protection properties over the seven day test period. High slug mortalities were obtained for the 1% *Commiphora molmol* oil extract.

### Example 7

### Split Substrate Assay

### Test Material

### Preparation of ethanolic extracts of Commiphora molmol oil (1%)

A 1ml aliquot of *Commiphora molmol* essential oil (supplier Tisserand, UK) was diluted to 100ml with absolute ethanol.

### Method

A filter paper was cut a in half and placed in a petri dish (9cm diameter, vented) leaving a 2mm gap between each half.

On one side of the filter paper 1 ml of tap water (control) was added and to the other half 1ml of ethanolic Commiphora molmol oil.

One slug (*Deroceras reticulatum*) was placed on the control filter paper, in each petri dish and left for 24 hours at room temperature.

A second control was prepared using 1ml of water on one sector of the filter paper and 1ml of ethanol on the other. The ethanolic sector was allowed to air-dry for 4 hours before remoistening with1 ml of water. After 24 hours the slugs were removed. And the filter papers dusted with powdered charcoal. These were left for 24 hours.

The following day the location of the slug and the state of the filter paper were recorded.

The charcoal powder was washed with tap water and the excess water poured, off to reveal the black slug trails.

The test was performed using 10 replicates per condition.

Digital photographs were taken of the slime trails and the areas covered determined by using the computer programme 'SIGMA Scan Pro5'.

### RESULTS

### Split Substrate Test

### Image Analysis Data

**Table 11. Commiphora molmol essential oil extract (1%)**

| **Petri-dish No.** | **SlugTrail Area Untouched** | **Slug Trail Area Covered** | **% Area covered by slug** |
|---|---|---|---|
| **10** | 145386 | 60977 | 30 |
| **9** | 139063 | 67300 | 33 |
| **8** | 155906 | 50457 | 24 |
| **7** | 151010 | 55353 | 27 |
| **6** | 152957 | 53406 | 26 |
| **5** | 162878 | 43485 | 21 |
| **4** | 144635 | 61728 | 30 |
| **3** | 187324 | 19039 | 9 |
| **2** | 186384 | 19979 | 10 |
| **1** | 192835 | 13528 | 7 |
| **Mean** | **161838** | **44525** | **22** |

**Table 12 Control (Water)**

| **Petri-dish No.** | **SlugTrail Area Untouched** | **Slug Trail Area Covered** | **% Area covered by slug** |
|---|---|---|---|
| **10** | 19370 | 186993 | 91 |
| **9** | 113617 | 92746 | 45 |
| **8** | 106658 | 99705 | 48 |
| **7** | 126976 | 79387 | 38 |
| **6** | 123528 | 82835 | 40 |
| **5** | 117439 | 88924 | 43 |
| **4** | 62442 | 143921 | 70 |
| **3** | 86736 | 119627 | 58 |
| **2** | 74632 | 131731 | 64 |
| **1** | 121334 | 85029 | 41 |
| **Mean** | **95273** | **111090** | **54** |

### Results

### Split Substrate Test

Interpretation of the patterns of cover, in the control and active sectors, showed that the *Commiphora myrrha* and Commiphora molmol essential oil (1%) had a significant repellency, on the *Deroceras reticulatum* slugs, effect compared to the control.

The control (water) did not show a differential between the two sectors of filter paper. The slugs spent almost equal time on both halves of the filter papers (54%: 46%).

### Example 7.1

### Repeating Split Substrate Assay to Test Repellency Properties of Commiphora sp. Extracts Using Tween 80 as an Extraction Medium

The split substrate assay described above was repeated using *Commiphora* sp. essential oils prepared using Tween 80 as an extraction medium.

### Preparation of samples

The essential oils of *C.molmol* and C*.guidotti* (suppliers Aldrich, USA) were prepared using Tween 80 as an extraction medium as shown below:

### Tween 80 extracts:

| Weight of Essential oil (g) | Weight of Tween 80 added (g) | Weight Of water (ml) | Tween 80 % w/w | % Essential oil w/w |
|---|---|---|---|---|
| 0 | 0.02 | 9.98 | 0.2 | 0 |
| 0.10 | 0.02 | 9.88 | 0.2 | 1 |

The split substrate experiments where repeated 20 times for each treatment.

### RESULTS

### Split Substrate Method

**Table 13. Repellency Properties of Commiphora sp. Plant Extracts Using Tween 80 As An Extraction Medium.**

| Treatment | Control | | Active Ingredient | |
|---|---|---|---|---|
| | % Trail Coverage | Std Error | % Trail Coverage | Std Error |
| 0.2% Tween 80,99.8% Water | 55 | 3 | 54 | 4 |
| 1% *C.guidotti,* 0.2% Tween 80, 98.8% Water | 52 | 3 | 12 | 2 |
| 0.5% *C.molmol,* 0.2% Tween 80,99.3% Water | 65 | 9 | 5 | 1 |

These results confirm that both plant extracts show significant mollusc repellency properties. *C*. *molmol* showed the greatest repellency activity using an essential oil concentration of 0.5% w/w.

### Example 8

### PHYTOTOXICITY TEST

### Testing of Commiphora molmol (100%) applied as a barrier

Materials tested: Commiphora molmol (100%)(grain size, supplier Baldwin) and Control: no barrier

### Method

Plastic trays (0.07m²) were lined with unbleached blotting paper and saturated with tap water. Three groups of organic winter wheat seeds (supplier Bean Freaks Ltd, UK) were arranged on the blotting paper surface.

Approximately 4 g of the test substance was arranged in a barrier around each group of seeds, so the seeds had approx. 1 cm width border surrounding them.

The trials were performed under controlled conditions (12 hour light: dark regime 15°C, 90% humidity).

A control was prepared using three groups of winter wheat seeds only. The test was performed using five replicates. The number of seeds germinated was recorded daily. The coleoptile length of the germinated seeds were measured days 3 to 7.

The percentage seed germination and the mean coleoptile length of the winter wheat seeds were calculated.

### Results

### Phytotoxicity Test: Commiphora molmol (100%)

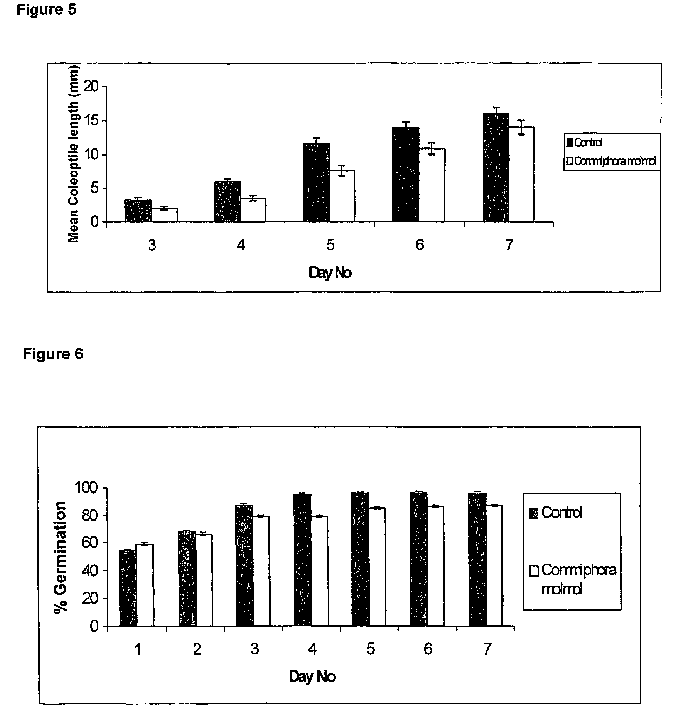

Commiphora molmol, applied as a barrier, had no detrimental effects on seed germination. Over the 7 days, the winter wheat seeds showed comparable germination rates to that of the control (see Figure 5).

There were, also, no significant differences between the coleoptile length of the test samples compared to the control after 7 days (see Figure 6).

### Example 9

### CAGED FIELD TRIALS (Somali Oleoresins)

### Materials And Methods

Test Materials: *Commiphora molmol* (100%) (supplier: G. Baldwin, UK), *Commiphora erythraea* (100%) (supplier Somalia), *Commiphora molmol* ethanolic extract (20%w/w) on sawdust (supplier Flavex, UK), *Commiphora molmol* oil ethanolic extract (1%w/w) on sawdust (supplier: Tisserand, UK) and Control: No barrier.

### Method

Caged field trials were conducted as described above in example 5.

### Results

### Caged Field Trials: Somali Oleoresins

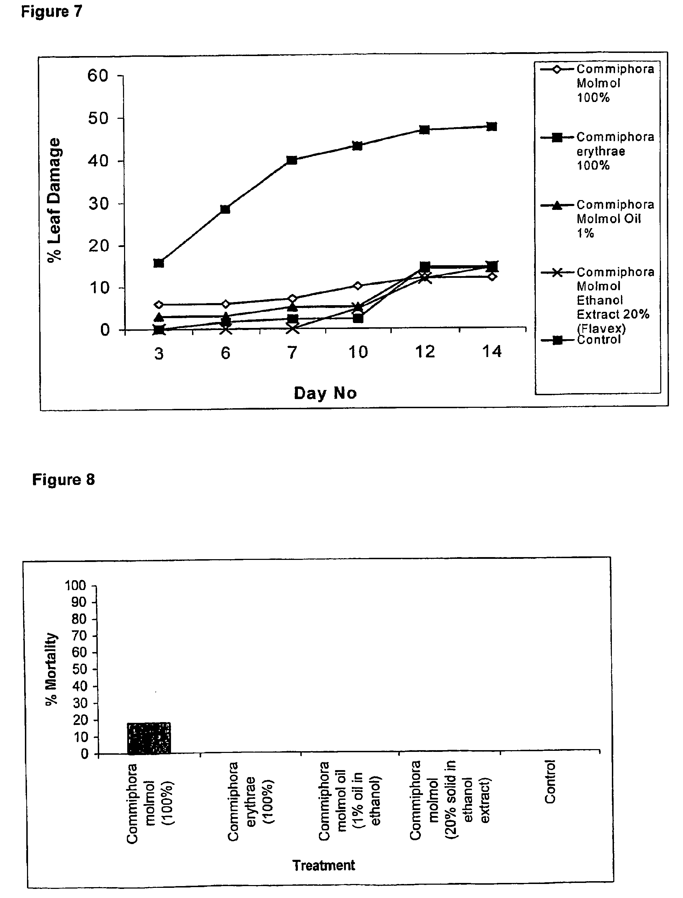

All of the Somali oleoresin plants and extracts showed excellent crop protection in the first week. The ethanolic extract of *Commiphora molmol,* in particular, showed perfect slug repellency properties, with no crop damage occurring in the first 7 days (see figure 7).

The 100% *Commiphora molmol* and *Commiphora* guidotti oleoresins and the essential oil *Commiphora molmol* (1%) all showed very good crop protection, in the first week compared to the controls (see Figure 7).

The crop protection properties of all the Somali oleoresins and extracts continued over the next week with a slight increase in leaf damage, but was significantly superior to the control (see Figure 7). The slug mortality results are shown in Figure 8.

Taking into account the heavy rainfall on day 6, then the plant barriers have performed very well over the 14 days.

### Example 10

### Comparing The Efficacy Of A Commercial Physical Barrier (Slug Stop™)With C.Molmol On A Peat Soil Substrate

The aim of this experiment was to compare the efficacy of the substrate/C. *molmol* mixtures with a commercial product, when applied as a physical barrier, against *D.reticulatum,* on a peat soil substrate.

### Materials tested:

1. Control- No barrier.
*2. Commiphora molmol* (Baldwin) (100%).
*3. Commiphora molmol* / Lignocell 2/2 sawdust (60:40) (2.4g +1.6g respectively).
*4. Commiphora molmol* / Corn cob (50:50)(2g + 2 g respectively).
5. Slug Stop™.

Slug Stop™ is an aluminium salt (especially aluminium sulphate) based composition (Growing Success Organics Limited, Salisbury, Wiltshire, UK).

### Method

4 g of the test mixtures were applied as physical barriers and tested as described in example 8 except a peat soil substrate was used.

### Results

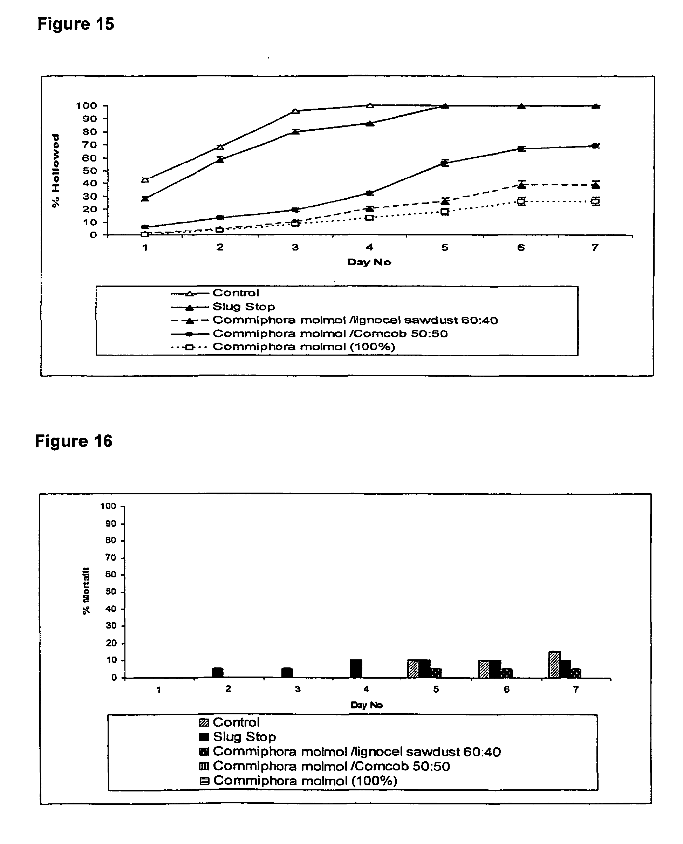

Results are shown in Figure 15 and 16.

The commercial product (Slug Stop ™) was shown to be ineffective, as a physical barrier, against *D.reticulatum* over the 7 day test period. It was found to be only slightly superior to the control (no barrier).

All of the *Commiphora* / substrate mixtures were very effective as physical barriers over the first 4 days. After 7 days the *Commiphora molmol*/Corncob mix (50:50) showed less seed hollowing (69%) than the control and Slug Stop ™ (100%).

The physical barriers using 100% *C. molmol* and *C.molmol*/Lignocel sawdust (60:40), were much more superior in reducing seed hollowing than all of the other treatments, over the 7 day test period, giving 26 and 39 % respectively.

Neither of the *C.molmol,* substrate mixes or the commercial product (Slug Stop ™), when applied as physical barriers on peat substrate, showed significant slug mortalities over the 7 days.

### Example 11

### Leaf Disk Assay

### Method

Slugs were starved for 24 hours before testing. A 9cm Whatman filter paper was placed in a single vented petri-dish and saturated with tap water. Using a stainless steel punch a 1.4 cm leaf disk was cut out from a lettuce leaf (Iceberg). A digital photograph was taken of the virgin leaf disk.

A 50µL aliquot of the solvent or plant extract was added to the leaf disk, spreading it equally over the leaf, and left exposed for 30 minutes. After the solvent had evaporated a single slug (*Deroceros reticulatum*) was added to the petri-dish, covered with a lid and placed in a controlled environmental chamber (12 hour dark/light, 15°C).
After 24 hours the amount of leaf eaten was recorded by taking a digital photograph and any mortality noted. Any live slugs were removed and placed in pot containing lettuce and placed in refrigerator.

The "before" and "after" photographs of the lettuce leaf disks were manipulated into black and white pixel images, using *Adobe Photoshop™* image computer software, and then pixel images quantified using *Sigma Scan™* computer software. The mean % leaf damage was calculated and any mortalities recorded. Twenty replicates were prepared per condition.

### Investigation Of The Antifeedant Activity Of C.molmol Ethanolic Extract Plant Extracts Against The Grey Field Slug D.reticulatum

The aim of this experiment was to investigate the feeding behaviour of the grey field slug (*D.reticulatum*), when coming into contact with the ethanolic extract of *C.molmol* sprayed onto lettuce leaf disks.

Different amounts of the ethanolic *C.molmol* extract (prepared 30/9/02) were weighed into a glass container and diluted with absolute ethanol.

### Results

**Table. 14 Effect of C. molmol (ethanolic extracts) on the feeding behaviour of D.reticulatum**

| | Treatment | | | | |
|---|---|---|---|---|---|
| | Control 1 Untreated | Control 2 Ethanol | 1% *C.molmol* | 5% *C.molmol* | 10% *C.molmol* |
| Mean % Leaf damage | 95 ± 5 | 95 ± 5 | 24 ± 8 | 3 ± 3 | 2 ± 2 |

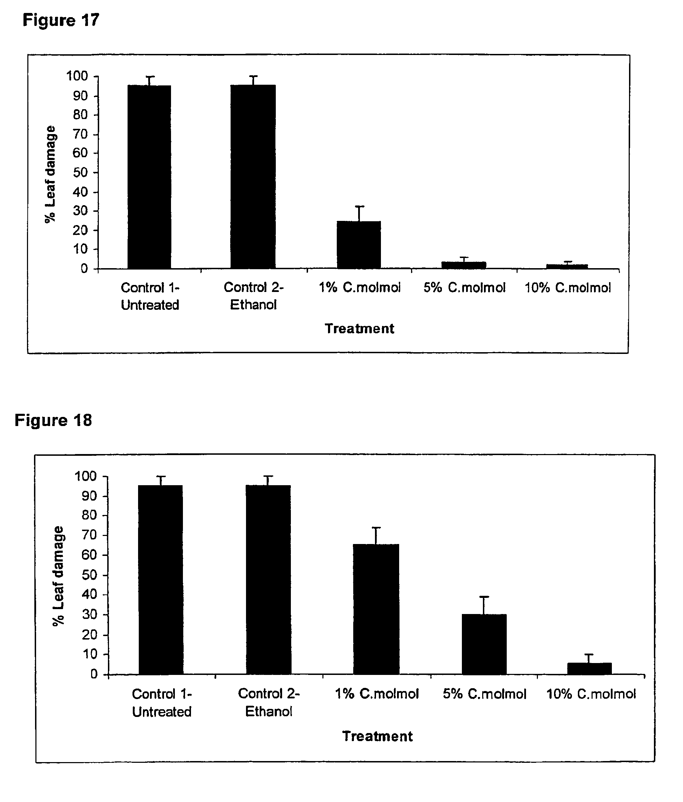

The effect of the ethanolic *C.molmol* extracts on the feeding behaviour of the slugs can also be observed in figure 17.

The ethanolic extract from *C.molmol* showed potent antifeedant properties, against *D.reticulatum,* with only 3 and 2% leaf damage occurring for the 5 and 10% plant extracts.

The 1% plant extract also showed moderate antifeedant properties with only 24% leaf damage occurring over 24 hours.

### Investigation Of The Antifeedant Activity Of C.molmol Hexane Plant Extracts Against The Grey Field Slug D.reticulatum

The aim of this experiment was to investigate the feeding behaviour of the grey field slug (*D.reticulatum*), when coming into contact with the hexane extract of *C.molmol,* sprayed onto lettuce leaf disks.

Different amounts of the hexane *C. molmol* extract were weighed into a glass container and diluted with absolute ethanol.

### Results

**Table 15. Effect of C. molmol (hexane extract) on the feeding behaviour of D.reticulatum**

| | Treatment | | |
|---|---|---|---|
| | 1% *C.molmol* | 5% *C.molmol* | 10% *C.molmol* |
| Mean% Leaf damage | 65 ± 9 | 30 ± 9 | 6 ± 4 |

The effect of the hexane *C*.*molmol* extracts on the feeding behaviour of the slugs data can also be observed in figure 18.

The hexane extracts from *C. molmol* showed potent antifeedant on the addition of the 10% plant extract onto the lettuce leaf disk resulting in only 6% leaf damage.

The 5% plant extract showed moderate antifeedant properties with 30% leaf damage.

The lowest hexane extract (1%) tested, for *C.molmol,* however, showed little antifeedant activity (65%) although significantly better than the controls (95%).

### Investigation Of The Antifeedant Activity Of C.guidotti Essential Oil Extract Against The Grey Field Slug D. reticulatum

The aim of this experiment was to investigate the feeding behaviour of the grey field slug (*D.reticulatum*), when coming into contact with the essential oil extract *C*. *guidotti* sprayed onto lettuce leaf disks.

Different amounts of the essential oil of *C*. *guiddott* extract (Aldrich) were weighed into a glass container and diluted with absolute ethanol. The essential oil of *C*. *guiddott* obtained from Aldrich is at such a high concentration that it acts as an irritant to humans and cannot be used as an molluscicidial or mollusc-repellant agent because of its very toxic effects.

### Results

**Table 16. Effect of Commiphora guiddotti (essential oil) extracts on the feeding behaviour of D.reticulatum**

| | Treatment | | |
|---|---|---|---|
| | 1% *C. guiddotti* | 5% *C. guiddotti* | 10% *C. guiddotti* |
| Mean% Leaf damage | 37 ± 10 | 3 ± 3 | 0 |

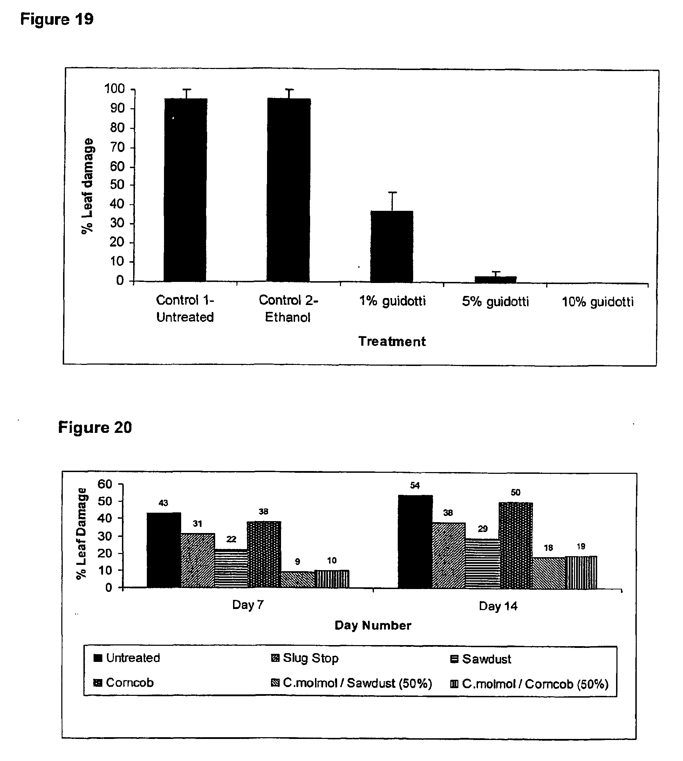

The effects of the essential oil extract on the feeding behaviour of the slugs can also be seen in Figure 19.

The essential oil extract from *C.guidotti* showed similar antifeedant properties to the ethanolic extract of C.molmol with only 3 and 0% leaf damage being sustained for the 5 and 10% plant extracts.

The 1% plant extract, also, showed moderate antifeedant properties with 37% leaf damage.

### Investigation of the Repellency Properties of Commiphora sp. Plant Extracts Using Different Extraction Media

The essential oils of *C.molmol* and *C.guidotti* (suppliers Aldrich, USA) were prepared using different extraction media as shown below:

### Ethanolic extracts:

| Weight of Essential oil (g) | Volume of ethanol added (ml) | Total Volume (ml) | % Essential oil w/v |
|---|---|---|---|
| 0.05 | 9.95 | 10.0 | 0.5 |
| 0.10 | 9.90 | 10.0 | 1 |
| 0.5 | 9.5 | 10.0 | 5 |

### DMSO extracts:

| Weight of Essential oil (g) | Weight of DMSO added (g) | Weight Of water (ml) | DMSO % w/w | % Essential oil w/w |
|---|---|---|---|---|
| 0 | 1 | 9.00 | 10.0 | 0 |
| 0.05 | 1 | 8.95 | 10.0 | 0.5 |
| 0.10 | 1 | 8.90 | 10.0 | 1 |
| 0.5 | 1 | 8.50 | 10.0 | 5 |

### Tween 80 extracts:

| Weight of Essential oil (g) | Weight of Tween 80 added (g) | Weight Of water (ml) | Tween 80 % w/w | % Essential oil w/w |
|---|---|---|---|---|
| 0 | 0.02 | 9.98 | 0.2 | 0 |
| 0.10 | 0.02 | 9.88 | 0.2 | 1 |

### Water extracts:

| Weight of Essential oil (g) | Weight Of water (ml) | Total volume (ml) | % Essential oil w/w |
|---|---|---|---|
| 0 | 9.98 | 10.0 | 0 |
| 0.05 | 9.95 | 10.0 | 0.5 |
| 0.1 | 9.90 | 1 | 1.0 |

The leaf disc assay as described above was performed using the plant extracts described above. The experiment was repeated 20 times for each treatment.

### RESULTS - Leaf Disc Assay

**Table. 17 Repellency Properties of Commiphora sp. Plant Extracts Using Ethanol As An Extraction Medium**

| Treatment | % Leaf Damage | Std Error | % Mortality | Std Error |
|---|---|---|---|---|
| 0.5% *C.molmol* essential oil + 99.5% Ethanol | 14 | 7 | 0 | 0 |
| 1% *C. molmol* essential oil + 99% Ethanol | 0 | 0 | 5 | 5 |
| 1*% C.guidotti* essential oil + 99% Ethanol | 35 | 1 | 0 | 0 |
| 5% *C.guidotti* essential oil + 95% Ethanol | 0 | 0 | 5 | 5 |
| Control - Ethanol | 95 | 5 | 0 | 0 |

**Table 18. Repellency Properties of Commiphora sp. Plant Extracts Using D.M.S.O As An Extraction Medium**

| Treatment | % Leaf Damage | Std Error | % Mortality | Std Error |
|---|---|---|---|---|
| 1% *C. molmol* essential oil + 10% DMSO + 89% Water | 0 | 0 | 20 | 9 |
| 1 % *C.guidotti* essential oil + 10% DMSO + 89% Water | 17 | 7 | 0 | 0 |
| 5 % *C.guidotti* essential oil + 10% DMSO + 85% Water | 0 | 0 | 10 | 7 |
| Control - 10% DMSO + 90 %H20 | 95 | 5 | 0 | 0 |

**Table 19. Repellency Properties of Commiphora sp. Plant Extracts Using Tween 80 As An Extraction Medium**

| Treatment | % Leaf Damage | Std Error | % Mortality | Std Error |
|---|---|---|---|---|
| 1% *C. molmol* essential oil + 0.2% Tween 80 + 98.8% Water | 0 | 0 | 5 | 5 |
| 1% *C.guidotti* essential oil + 0.2% Tween 80 + 98.8% Water | 20 | 9 | 0 | 0 |
| Control - 0.2% Tween 80 + 99.8% Water | 95 | 4 | 0 | 0 |

**Table 20. Repellency Properties of Commiphora sp. Plant Extracts Using Water As An Extraction Medium.**

| Treatment | % Leaf Damage | Std Error | % Mortality | Std Error |
|---|---|---|---|---|
| 0.5% *C.molmol* essential oil + 99.5% Water | 83 | 7 | 0 | 0 |
| 1% *C.molmol* essential oil | 43 | 10 | 5 | 5 |
| + 99% Water | | | | |
| 0.5% *C.guidotti* essential oil + 99.5% Water | 11 | 6 | 5 | 5 |
| 1% *C.guidotti* essential oil + 99% Water | 10 | 6 | 0 | 0 |
| Control-Water | 95 | 5 | 0 | 0 |

Both plant extracts, *C.molmol* and *C.guidotti,* showed significant mollusc repellency behaviour, using the range of extraction media presented, when tested using the leaf disc assay.

The most effective was found to be *C. molmol,* which was active as low as 0.5% w/w of an essential oil extract, especially when taken up in DMSO and Tween 80. *C.guidotti* was found to be more active when water was used as an extraction medium.

### Example 12

### Caged Field Trials

The aim of this experiment is to test the efficacy of the substrates mixed with *Commiphora molmol,* as physical barriers, in semi-field conditions. The test samples were evaluated against a commercial product (Slug Stop™).

### Method

Caged field trials were conducted as defined in Example 5.

### Materials tested:

i) *Commiphora molmol* /Sawdust (50%)
ii) *Commiphora molmol* /Corncob (50%)
iii) Spruce Sawdust (100%)
iv) Corncob (100%)
v) Slug Stop™
vi) Control (No barrier)

### Results

Results are shown in table 21 and displayed graphically in figure 20.

**Table. 21 Effect of C.molmol substrate mixes on Crop Protection, when applied as a barrier**

| | **% Leaf Damage** | | | | |
|---|---|---|---|---|---|
| **Treatment / Day No.** | 3 | 5 | **Day 7** | 11 | **Day 14** |
| **Untreated** | 36 | 40 | **43** | 50 | **54** |
| **Slug Stop** | 28 | 30 | **31** | 34 | **38** |
| **Sawdust (Spruce)** | 6 | 9 | **22** | 29 | **29** |
| **Corncob** | 14 | 33 | **38** | 44 | **50** |
| ***C.molmol* Sawdust (50%)** | 5 | 6 | **9** | 10 | **18** |
| ***C.molmol*** **/ Corncob (50%)** | 1 | 6 | **10** | 16 | **19** |

Both of the *C.molmol substrate* mixes (sawdust and corncob) when mixed with Spruce sawdust and Corncob inert substrates (50%), showed to be very good physical barriers against *D.reticulatum.* At the end of the first week they yielded only 9 and 10% leaf damage respectively.

The Spruce sawdust also gave some crop protection in the first week resulting in 22% leaf damage compared to the untreated control (43%) and the commercial physical barrier Slug Stop ™ (31%).

The Corncob physical barriers, as expected, did not show any crop protection properties and was not significantly different to the untreated control.

The *Commiphora* substrate (sawdust and corncob) physical barriers were also very effective in the second week resulting in only 10 and 16% leaf damage on day 11 and 18 and 19 % leaf damage, respectively, on day 14.

The use of sawdust on its own was more effective than the commercial barrier Slug Stop ™ on day 14 (38%), whilst the Corncob physical barrier gave little crop protection (50%) and was not significantly different to the untreated control (54%).

### CONCLUSION

Initial screening of inert materials, applied as barriers, showed that both Spruce sawdust and sand could be used as possible diluents, having no detrimental effects on the slugs (data not shown).

The African plants chosen, for this study, were sourced from Nigeria and Somalia and were observed to have contrasting physical and chemical properties. The former having a contact irritant effect on the slugs, whilst the latter contained volatile odoriferous compounds which would could have potential slug repellency properties.

The 100% Afri-bark raw material plants (*Detarium microcarpum, Ximenia americana* and *Polygonum limbatum*) showed good potential, as physical barriers, in particular *Detarium microcarpum* bark and *Ximenia americana* bark. When the slugs came into contact with these two plants they showed immediate withdrawal effects. This was more marked when the bark materials were wet rather than dry.

*Detarium microcarpum* produced great slug mortality as well as good repellency properties, when applied as a 100% raw material.

Mixing the Afri-bark plants with Spruce sawdust (50%) reduced the crop protection properties of *Detarium microcarpum* drastically, whilst *Ximenia americana* continued to perform well.

Testing the Afri-bark plants (100%), on peat soil, showed significant reduction in the feeding activities of the slugs for *Ximenia americana* only, however the % seed hollowing was greater than that obtained using bleached blotting paper.

The effect of soil in reducing crop protection in the laboratory terraria studies could have been due to: the effect of soil pH; the adsorption onto clay; and the blotting paper creates a second barrier (chemical) in addition to the physical barrier, due to the horizontal leaching out effect of the natural chemicals present in the plants, whilst soil will tend to leach the natural plant chemicals downwards, rather than outwards.

The use of alcoholic Afri-bark extracts, as sawdust barriers, reduced greatly the feeding frequency the slugs. In particular, *Ximenia americana,* both ethanolic and methanolic, during the first week, showed excellent crop protection, with very little slug mortality. This significant repellency behaviour continued for the second week, for both Afri-bark alcoholic extracts.

Both Somali oleoresins (100%) proved to be excellent physical barriers against the slugs. The terraria trials (barrier test) for the both of Somali oleoresins (*Commiphora guidotti , Commiphora molmol*) showed hardly any crop damage. However substantially high slug mortalities were obtained during the first week (of the same magnitude that was observed for metaldehyde).

This is, more than likely, due to the physical nature of the oleoresins, rather than due to toxicity. When wet the oleoresins becomes very sticky and glue-like with a very pungent aromatic smell (balsamic). On contact with these oleoresins will adhere onto the very moist slug foot and result in the slug eventually becoming dehydrated,

The split substrate test confirmed the repellency behaviour of the Afri-bark plants and *Detarium microcarpum* was highlighted as being the best candidate showing the amount of movement on the active filter sectors. The other Afri-bark plants (*Ximenia americana* bark and leaf, *Polygonum limbatum* leaf) also showed, remarkably, good slug repellency properties.

The split substrate test for the *Commiphora molmol* oil (1%) showed significant repellency activity compared to the control but was not as potent as the Afri-bark plants.

Very high crop protection was obtained using a barrier compromising of *Commiphora molmol* (60%) and sawdust (40%), over an eleven day period, with very low slug mortality.

Significant crop protection was, also, obtained using *Commiphora molmol* essential oil extracts (1% & 0.5%) showing high slug mortalities.

The ethanolic extracts of Commiphora molmol and *Commiphora guidotti ,* on sawdust, were disappointing as physical barriers. This, was however on peat soil substrate and we observed this "soil effect" with the Afri-bark plants.

The final test was shown with the caged field trials. Under these natural conditions, the slugs were given ample space (1m²) to avoid the plant barriers if they wished to do so.

Contrary to the laboratory peat soil, terraria trials, all of the Afri-bark plants and Somali oleoresins proved to be excellent candidates for use as natural physical barriers to the grey field slug. In particular, the ethanolic *Commiphora molmol* extract (20%), on sawdust, showed no leaf damage at all in the first week. Furthermore, all of the Commiphora plant applications, used as physical barriers, showed excellent crop protection properties compared to both untreated controls and commercial physical barriers (Slug Stop™).

Low slug mortality was obtained for all the plants tested, under these natural conditions, confirming them to be environmentally physical barriers (see Figures 7 and 8).

The caged field trials confirmed that both the Afri-bark and Somali oleoresins act as natural barriers against molluscs.

In terms of crop protection a weekly or bi-weekly application is recommended.

## Claims

1. Use of plant material derived from a plant in the plant family *Caesalpiniaceae, Olaceae, Polygonaceae* or *Bursecaceae* as a terrestial molluscicidal and/or mollusc-repellant agent.

2. The use according to claim 1, wherein the plant is in the genera *Datarium, Ximenia, Polygonum, Commiphora* or *Boswellia.*

3. The use according to claim 1 or claim 2, wherein the plant is *Datarium microcarpum, Ximenia americana, Polygonum limbatum, Commiphora molmol, Commiphora guidotti* or a *Boswellia sp.*

4. The use according to any one of the preceeding claims, wherein the plant material comprises substantially the whole plant.

5. The use according to any one of claims 1 to 3, wherein the plant material comprises bark, leaves or a shoot of the plant.

6. The use according to claim 4 or claim 5, wherein the plant material is in the form of particles or a powder.

7. The use according to any one of claims 1 to 3, wherein the plant material is an alcoholic extract of the plant.

8. The use according to claim 7, wherein the plant material is an alcoholic extract of the essential oil of the plant.

9. The use according to any one of claims 1 to 3, wherein the plant material is a substantially isolated extract or mixture of extracts having molluscicidal and/or mollusc-repellent activity.

10. The use according to any one of the preceding claims, wherein the plant material is used in combination with a particulate.

11. The use according to claim 10, wherein the particulate is sand, sharp sand, pumice granules, sawdust, wood chips or corncob chips.

12. The use according to claim 10, wherein the particulate is sawdust.

13. The use according to any one of claims 9 to 11, wherein the plant material is in a formulation capable of being sprayed.

14. The use according to claim 13, wherein the plant material is sprayed onto plants or seeds.

15. The use according to any one of claims 1 to 14, wherein the plant material is used in conjunction with an effector agent.

16. The use according to claim 15, wherein the effector agent is a fertiliser or a pesticide.

17. A molluscicidal and/or mollusc-repellent preparation for use in a terrestrial environment comprising plant material derived from *Commiphora molmol or Commiphora guidotti,* wherein the plant material is in the form of particles or a powder.

18. The preparation according to claim 17, wherein the plant material comprises substantially the whole plant.

19. The preparation according to claim 17 , wherein the plant material comprises bark, leaves or a shoot of the plant.

20. The preparation according to claim 17, wherein the plant material is a substantially isolated extract or mixture of extracts having molluscicidal and/or mollusc-repellent activity.

21. The preparation according to any one of claims 17 to 20, which comprises at least 5% (w/w) of an inert carrier.

22. The preparation according to any one of claims 17 to 21, which additionally comprises an effector agent.

23. A terrestrial molluscicidal and/or mollusc-repellent preparation comprising plant material wherein the plant material has molluscicidal and/or mollusc-repellant activity and a particulate, wherein the plant material is obtained from a plant in the plant family *Caesalpiniaceae, Olaceae, Polygonaceae* or *Bursecaceae.*

24. The preparation according to claim 23, wherein the particulate is an inert particulate.

25. The preparation according to claim 24, wherein the particulate is sand, sharp sand, pumice granules, sawdust, wood chips or corncob chips.

26. The preparation according to claim 24, wherein the particulate is sawdust.

27. The preparation according to any one of claims 23 to 26, wherein the plant material comprises substantially the whole plant.

28. The preparation according to any one of claims 23 to 26, wherein the plant material comprises bark, leaves or a shoot of the plant.

29. The preparation according to claim 23 or claim 26, wherein the plant material is in the form of particles or a powder.

30. The preparation according to any one of claims 23 to 26, wherein the plant material is an alcoholic extract of the plant.

31. The preparation according to claim 30, wherein the plant material is an alcoholic extract of the essential oil of the plant.

32. The preparation according to any one of claims 23 to 26, wherein the plant material is a substantially isolated extract or mixture of extracts having molluscicidal and/or mollusc-repellent activity.

33. The preparation according to any one of claims 23 to 32, which additionally comprises an effector agent.

34. The preparation according to any one of claims 23 to 33 wherein the plant material is obtained from a plant in the genera *Datarium, Ximenia, Polygonum, Commiphora* or *Boswellia.*

35. The preparation according to any one of claims 23 to 34, wherein the plant is *Datarium microcarpum, Ximenia americana, Polygonum limbatum, Commiphora molmol, Commiphora guidotti* or a *Boswellia sp.*

36. Use of the preparation according to any one of claims 23 to 35, as a molluscicidal and/or mollusc-repellent.

37. The use according to claim 36, wherein the preparation is used as a molluscicidal and/or mollusc-repellent on plants.

## Patentansprüche

1. Verwendung von Pflanzenmaterial, das von einer Pflanze aus der Pflanzenfamilie *Caesalpiniaceae, Olaceae, Polygonaceae* oder *Bursecaceae* stammt, als Molluskizid und/oder Mollusken-Repellent gegen Landmollusken.

2. Verwendung nach Anspruch 1, wobei die Pflanze aus den Gattungen *Datarium, Ximenia, Polygonum, Commiphora* oder *Boswellia* stammt.

3. Verwendung nach Anspruch 1 oder Anspruch 2, wobei die Pflanze *Datarium microcarpum, Ximenia americana, Polygonum limbatum, Commiphora molmol, Commiphora guidotti* oder eine *Boswellia sp.* ist.

4. Verwendung nach irgendeinem der vorhergehenden Ansprüche, wobei das Pflanzenmaterial im Wesentlichen die ganze Pflanze umfaßt.

5. Verwendung nach irgendeinem der Ansprüche 1 bis 3, wobei das Pflanzenmaterial Rinde, Blätter oder einen Sproß der Pflanze umfaßt.

6. Verwendung nach Anspruch 4 oder Anspruch 5, wobei das Pflanzenmaterial in Form von Partikeln oder in Form eines Pulvers vorliegt.

7. Verwendung nach irgendeinem der Ansprüche 1 bis 3, wobei das Pflanzenmaterial ein alkoholischer Extrakt aus der Pflanze ist.

8. Verwendung nach Anspruch 7, wobei das Pflanzenmaterial ein alkoholischer Extrakt des ätherischen Öls der Pflanze ist.

9. Verwendung nach irgendeinem der Ansprüche 1 bis 3, wobei das Pflanzenmaterial eine im Wesentlichen isolierte Verbindung oder Mischung von Verbindungen mit molluskizider und/oder Mollusken abstoßender Wirkung ist.

10. Verwendung nach irgendeinem der vorhergehenden Ansprüche, wobei das Pflanzenmaterial in Kombination mit Feststoffteilchen verwendet wird.

11. Verwendung nach Anspruch 10, wobei die Feststoffteilchen Sand, scharfer Sand, Bimssteingranulat, Sägemehl, Holzschnitzel oder Maiskolbenschnitzel sind.

12. Verwendung nach Anspruch 10, wobei die Feststoffteilchen Sägemehl sind.

13. Verwendung nach irgendeinem der Ansprüche 9 bis 11, wobei das Pflanzenmaterial in einer sprühfähigen Formulierung vorliegt.

14. Verwendung nach Anspruch 13, wobei das Pflanzenmaterial auf Pflanzen oder Saatgut aufgesprüht wird.

15. Verwendung nach irgendeinem der Ansprüche 1 bis 14, wobei das Pflanzenmaterial in Verbindung mit einem Effektormittel eingesetzt wird.

16. Verwendung nach Anspruch 15, wobei das Effektormittel ein Düngemittel oder ein Pestizid ist.

17. Molluskizide und/oder Mollusken abstoßende Zubereitung zur Verwendung in terrestrischer Umgebung, die Pflanzenmaterial umfaßt, das von *Commiphora molmol* oder *Commiphora guidotti* stammt, wobei das Pflanzenmaterial in Form von Partikeln oder in Form eines Pulvers vorliegt.

18. Zubereitung nach Anspruch 17, wobei das Pflanzenmaterial im Wesentlichen die ganze Pflanze umfaßt.

19. Zubereitung nach Anspruch 17, wobei das Pflanzenmaterial Rinde, Blätter oder einen Sproß der Pflanze umfaßt.

20. Zubereitung nach Anspruch 17, wobei das Pflanzenmaterial eine im Wesentlichen isolierte Verbindung oder Mischung von Verbindungen mit molluskizider und/oder Mollusken abstoßender Wirkung ist.

21. Zubereitung nach irgendeinem der Ansprüche 17 bis 20, die wenigstens 5% (w/w) eines inerten Trägers umfaßt.

22. Zubereitung nach irgendeinem der Ansprüche 17 bis 21, die zusätzlich ein Effektormittel umfaßt.

23. Molluskizide und/oder Mollusken abstoßende Zubereitung gegen Landmollusken, die Pflanzenmaterial und Feststoffteilchen umfaßt, wobei das Pflanzenmaterial molluskizide und/oder Mollusken abstoßende Wirkung aufweist und von einer Pflanze aus der Pflanzenfamilie *Caesalpiniaceae, Olaceae, Polygonaceae* oder *Bursecaceae* erhalten wird.

24. Zubereitung nach Anspruch 23, wobei die Feststoffteilchen inerte Feststoffteilchen sind.

25. Zubereitung nach Anspruch 24, wobei die Feststoffteilchen Sand, scharfer Sand, Bimssteingranulat, Sägemehl, Holzschnitzel oder Maiskolbenschnitzel sind.

26. Zubereitung nach Anspruch 24, wobei die Feststoffteilchen Sägemehl sind.

27. Zubereitung nach irgendeinem der Ansprüche 23 bis 26, wobei das Pflanzenmaterial im Wesentlich die ganze Pflanze umfaßt.

28. Zubereitung nach irgendeinem der Ansprüche 23 bis 26, wobei das Pflanzenmaterial Rinde, Blätter oder einen Sproß der Pflanze umfaßt.

29. Zubereitung nach Anspruch 23 oder Anspruch 26, wobei das Pflanzenmaterial in Form von Partikeln oder in Form eines Pulvers vorliegt.

30. Zubereitung nach irgendeinem der Ansprüche 23 bis 26, wobei das Pflanzenmaterial ein alkoholischer Extrakt aus der Pflanze ist.

31. Zubereitung nach Anspruch 30, wobei das Pflanzenmaterial ein alkoholischer Extrakt des ätherischen Öls der Pflanze ist.

32. Zubereitung nach irgendeinem der Ansprüche 23 bis 26, wobei das Pflanzenmaterial eine im Wesentlichen isolierte Verbindung oder eine Mischung von Verbindungen mit molluskizider und/oder Mollusken abstoßender Wirkung ist.

33. Zubereitung nach irgendeinem der Ansprüche 23 bis 32, die zusätzlich ein Effektormittel umfaßt.

34. Zubereitung nach irgendeinem der Ansprüche 23 bis 33, wobei das Pflanzenmaterial von einer Pflanze aus den Gattungen *Datarium, Ximenia, Polygonum, Commiphora* oder *Boswellia* erhalten wird.

35. Zubereitung nach irgendeinem der Ansprüche 23 bis 34, wobei die Pflanze *Datarium microcarpum, Ximenia americana, Polygonum limbatum, Commiphora molmol, Commiphora guidotti* oder eine *Boswellia sp.* ist.

36. Verwendung der Zubereitung gemäß irgendeinem der Ansprüche 23 bis 35 als Molluskizid und/oder Mollusken-Repellent.

37. Verwendung nach Anspruch 36, wobei die Zubereitung als Molluskizid und/oder Mollusken-Repellent auf Pflanzen eingesetzt wird.

## Revendications

1. Utilisation d'un matériel végétal dérivé d'une plante de la famille des plantes *Caesalpiniaceae, Olaceae, Polygonaceae* ou *Bursecaceae* comme molluscicide et/ou agent répulsif contre des mollusques terrestres.

2. Utilisation selon la revendication 1, dans laquelle la plante appartient au genre *Datarium, Ximenia, Polygonum, Commiphora* ou *Boswellia.*

3. Utilisation selon la revendication 1 ou la revendication 2, dans laquelle la plante est *Datarium microcarpum, Ximenia americana, Polygonum limbatum, Commiphora molmol, Commiphora guidotti* ou une espèce *Boswellia.*

4. Utilisation selon l'une quelconque des revendications précédentes, dans laquelle le matériel végétal comprend la plante sensiblement entière.

5. Utilisation selon l'une quelconque des revendications 1 à 3, dans laquelle le matériel végétal comprend l'écorce, les feuilles ou une pousse de la plante.

6. Utilisation selon la revendication 4 ou la revendication 5, dans laquelle le matériel végétal se présente sous forme de particules ou d'une poudre.

7. Utilisation selon l'une quelconque des revendications 1 à 3, dans laquelle le matériel végétal est un extrait alcoolique de la plante.

8. Utilisation selon la revendication 7, dans laquelle le matériel végétal est un extrait alcoolique de l'huile essentielle de la plante.

9. Utilisation selon l'une quelconque des revendications 1 à 3, dans laquelle le matériel végétal est un composé sensiblement isolé ou un mélange de composés ayant une activité molluscicide et/ou répulsive contre des mollusques.

10. Utilisation selon l'une quelconque des revendications précédentes, dans laquelle le matériel végétal est utilisé en combinaison à une matière particulaire.

11. Utilisation selon la revendication 10, dans laquelle la matière particulaire est le sable, le sable concassé, des granules de ponce, la sciure, des copeaux de bois ou des fragments d'épi de mais.

12. Utilisation selon la revendication 10, dans laquelle la matière particulaire est la sciure.

13. Utilisation selon l'une quelconque des revendications 9 à 11, dans laquelle le matériel végétal est dans une formulation susceptible d'être pulvérisée.

14. Utilisation selon la revendication 13, dans laquelle le matériel végétal est pulvénsé sur des plantes ou des graines.

15. Utilisation selon l'une quelconque des revendications 1 à 14, dans laquelle le matériel végétal est utilisé en combinaison avec un agent effecteur.

16. Utilisation selon la revendication 15, dans laquelle l'agent effecteur est un fertilisant ou un pesticide.

17. Préparation molluscicide et/ou répulsive contre des mollusques pour une utilisation dans un environnement terrestre comprenant un matériel végétal dérivé de *Commiphora molmol* ou *Commiphora guidotti,* dans laquelle le matériel végétal se présente sous forme de particules ou d'une poudre.

18. Préparation selon la revendication 17, dans laquelle le matériel végétal comprend la plante sensiblement entière.

19. Préparation selon la revendication 17, dans laquelle le matériel végétal comprend l'écorce, les feuilles ou une pousse de la plante,

20. Préparation selon la revendication 17, dans laquelle le matériel végétal est un composé sensiblement isolé ou un mélange de composés ayant une activité molluscicide et/ou répulsive contre des mollusques.

21. Préparation selon l'une quelconque des revendications 17 à 20, qui comprend au moins 5 % (p/p) d'un support inerte.

22. Préparation selon l'une quelconque des revendications 17 à 21, qui comprend en outre un agent effecteur.

23. Préparation molluscicide et/ou répulsive contre des mollusques terrestres comprenant un matériel végétal, dans laquelle le matériel végétal a une activité molluscicide et/ou répulsive contre des mollusques, et une matière particulaire, le matériel végétal étant obtenu à partir d'une plante de la famille des plantes *Caesalpinioceae, Olaceae, Polygonaceae* ou *Bursecaceae.*

24. Préparation selon la revendication 23, dans laquelle la matière particulaire est une matière particulaire inerte.

25. Préparation selon la revendication 24, dans laquelle la matière particulaire est le sable, le sable concassé, des granules de ponce, la sciure, des copeaux de bois ou des fragments d'épi de maïs.

26. Préparation selon la revendication 24, dans laquelle la matière particulaire est la sciure.

27. Préparation selon l'une quelconque des revendications 23 à 26, dans laquelle le matériel végétal comprend la plante sensiblement entière.

28. Préparation selon l'une quelconque des revendications 23 à 26, dans laquelle le matériel végétal comprend l'écorce, les feuilles ou une pousse de la plante.

29. Préparation selon la revendication 23 ou la revendication 26, dans laquelle le matériel végétal se présente sous forme de particules ou d'une poudre.

30. Préparation selon l'une quelconque des revendications 23 to 26, dans laquelle le matériel végétal est un extrait alcoolique de la plante.

31. Préparation selon la revendication 30, dans laquelle le matériel végétal est un extrait alcoolique de l'huile essentielle de la plante.

32. Préparation selon l'une quelconque des revendications 23 à 26, dans laquelle le matériel végétal est un composé sensiblement isolé ou un mélange de composés ayant une activité molluscicide et/ou répulsive contre des mollusques.

33. Préparation selon l'une quelconque des revendications 23 à 32, qui comprend en outre un agent effecteur.

34. Préparation selon l'une quelconque des revendications 23 à 33, dans laquelle le matériel végétal est obtenu à partir d'une plante du genre *Datarium, Ximenia, Polygonum, Commiphora* ou *Boswellia.*

35. Préparation selon l'une quelconque des revendications 23 à 34, dans laquelle la plante est *Datarium microcarpum, Ximenia americarea, Polygonum limbatum, Commiphora molmol, Commiphora guidolli* ou une espèce *Boswellia.*

36. Utilisation de la préparation selon l'une quelconque des revendications 23 à 35, comme molluscicide et/ou répulsif contre des mollusques.

37. Utilisation selon la revendication 36, dans laquelle la préparation est utilisée comme molluscicide et/ou répulsif contre des mollusques sur des plantes.
